(19) Europäisches Patentamt
European Patent Office
Office européen des brevets

(11)  EP 3 981 974 B1

(12)  **EUROPEAN PATENT SPECIFICATION**

(45) Date of publication and mention
of the grant of the patent:
**07.08.2024  Bulletin 2024/32**

(51) International Patent Classification (IPC):
*F02D 41/02* (2006.01)    *F02D 41/40* (2006.01)
*F02D 35/02* (2006.01)    *F02D 41/14* (2006.01)

(21) Application number: **21195077.9**

(22) Date of filing: **06.09.2021**

(52) Cooperative Patent Classification (CPC):
**F02D 41/403; F02D 35/028; F02D 41/024;**
**F02D 41/405;** F02D 35/026; F02D 41/029;
F02D 41/1406; F02D 41/402; Y02T 10/12;
Y02T 10/40

(54) **CONTROL SYSTEM FOR INTERNAL COMBUSTION ENGINE**

STEUERUNGSSYSTEM FÜR VERBRENNUNGSMOTOR

SYSTÈME DE COMMANDE POUR MOTEUR À COMBUSTION INTERNE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **12.10.2020   JP 2020171783**

(43) Date of publication of application:
**13.04.2022   Bulletin 2022/15**

(73) Proprietor: **KABUSHIKI KAISHA TOYOTA**
**JIDOSHOKKI**
**Kariya-shi, Aichi-ken 448-8671 (JP)**

(72) Inventor: **WATANABE, Junya**
**Kariya-shi, Aichi-ken,, 448-8671 (JP)**

(74) Representative: **Winter, Brandl - Partnerschaft**
**mbB**
**Alois-Steinecker-Straße 22**
**85354 Freising (DE)**

(56) References cited:
**EP-A1- 1 318 289        DE-A1- 102004 032 537**
**DE-B4- 102004 025 406   DE-B4- 102009 010 309**
**US-A1- 2005 252 198**

## Description

This application claims priority to Japanese patent application serial number 2020-171783 filed October 12, 2020.

The present invention relates to a control system for controlling a compression self-ignition type internal combustion engine.

Various technologies have been proposed for control systems to control compression self-ignition type internal combustion engines. For example, DE 10 2009 010309 B4) relates to a control system tor an internal combustion engine configured to control an internal combustion engine having injectors configured to inject fuel into cylinders. The control system comprises a control unit configured to control the injectors to perform pilot injections, followed by a main injection, and to perform after-injections at a timing of a temperature increase request when the temperature of exhaust gas is to be increased. A pilot injection amount is set to 2 mg. A timing of the main injection is set to an early point in time shortly after the top dead center. Moreover, DE 10 2004 032 537 A1 relates to a control system tor an internal combustion engine configured to control an internal combustion engine having injectors configured to inject fuel into cylinders. The control system comprises a control unit performing a pilot injection, a main injection and an after-injection. An injection amount of a pilot injection is determined on the basis of an operation-dependent map determined in advance. US 2005 / 0 252 198 A1 discloses an exhaust gas cleaning device for an internal combustion engine. An injection pattern selecting means for selecting one of first to third injection patterns with one or more fuel injections per heat cycle is described. The different patterns can have two injections, three injections or four injections. For example, a control unit for an internal combustion engine disclosed in JP2020-33921A includes an index calculating unit and a target calculating unit. The index calculating unit is configured to calculate an index $\tau 0$ representing an ignition delay of fuel when a fuel injection valve within a cylinder performs a single injection. The index $\tau 0$ is calculated using the Arrhenius equation. Parameters, such as intake air temperature, intake air pressure, EGR gas recirculation volume, boost pressure, engine coolant fluid temperature, outside air temperature, and outside air pressure, that cause a change in the ignitability of the fuel are used in the Arrhenius equation.

The target calculating unit calculates an ignition delay target value $\tau trg$ based on the ignitability of the fuel and the index $\tau 0$. On the other hand, the target delay $\tau$ is calculated with reference to parameters such as, for example, boost pressure, intake air volume, fluid temperature, intake air temperature, start timing of the main injection, and fuel injection volume of the main injection. The control unit includes a valve control unit. The valve control unit reduces the fuel injection volume by a pilot injection when the ignition delay $\tau$ is shorter than the ignition delay target value $\tau trg$. On the other hand, the valve control unit increases the fuel injection volume by the pilot injection when the ignition delay $\tau$ is longer than the ignition delay target value $\tau trg$. This allows the combustion noise level to be maintained at a constant value.

The internal combustion engine may control the injection of fuel for performing a regeneration combustion for regenerating a Diesel Particulate Filter. In this case, the fuel injection is controlled such that the main injection timing is retarded for increasing the temperature of the exhaust gas. However, with the control unit for the internal combustion engine described in JP2020-33921A, a temperature within cylinders at the main injection timing is lowered more than necessary due to adiabatic expansion. Therefore, in order to set the ignition delay $\tau$ of the main injection to the ignition delay target value $\tau trg$, it is necessary to set the desired temperature within the cylinders during the main injection to a higher target temperature. In other words, the process necessitates an increase in the pilot injection volume. As a result, an after-injection volume of an after-injection, in which the fuel is injected after the main injection, will be reduced. This may be a problem in that it hinders an increase in temperature of the exhaust gas.

Therefore, there has been a need in the art to provide a control system for internal combustion engines that can effectively increase the temperature of the exhaust gas while ensuring the proper after-injection volume of the after-injection, at which the fuel is injected after the main injection.

One aspect of the present disclosure is directed to a control system configured to control a compression self-ignition type internal combustion engine having injectors configured to inject fuel into cylinders. The control system includes a control unit. The control unit causes the injectors to perform pilot injections, followed by a main injection, and then to perform after-injections at a timing of a temperature increase request when the temperature of exhaust gas is to be increased. The control unit includes a target ignition delay acquiring unit configured to acquire a target ignition delay such that the combustion of a main fuel injected into the cylinders by the main injection is started at a timing elapsed from the compression top dead center by the target ignition delay. The control unit further includes a target pilot injection volume setting unit configured to set a target pilot injection volume of the pilot injections to ensure sufficient after-injection volume for the after-injection, which is sufficient to allow the after-injections to be multi-staged, by limiting the pilot injections to the target pilot injection volume, wherein the after injection-volume is the result of subtracting the target pilot injection volume and a main injection volume from a total fuel injection volume. The control unit also includes a main injection timing setting unit configured to set a main injection timing such that the main fuel injected into the cylinders is combusted, such that the main injection timing is retarded to the maximum extent possible until the target ignition delay has been reached due to the limitation of the pilot injections to the target pilot injection volume.

Accordingly, the target pilot injection volume is injected during the pilot injections. In this case, the control unit may set the main injection timing such that the main injection injected into the cylinders during the main injection can be combusted with the target ignition delay. This ensures the combustion robustness. Further, a sufficient after-injection volume can be ensured by limiting the pilot injections to the target pilot injection volume. As such, the temperature of the exhaust gas can be effectively increased since the after-injections are multi-staged. Further, the pilot injections are limited to the target pilot injection volume. In this case, the main injection timing can be retarded to the maximum extent possible until the target ignition delay has reached. Therefore, the system is capable of effectively increasing the temperature of the exhaust gas.

According to another aspect of the present disclosure, the control system includes a memory, in which a target ignition delay is stored in advance, the target ignition delay corresponding to an engine rotation speed and a total fuel injection volume in one combustion stroke, and the control unit obtains the target ignition delay from the memory (53). Moreover, the memory can be configured to store a minimum injection volume that can be injected from the injectors in advance. The target pilot injection volume setting unit is configured to set the injection volume by multiplying the minimum injection volume by the number of pilot injections to be injected. The injection volume is set as the target pilot injection volume.

Accordingly, the control unit can minimize the pilot injection volume. The after-injections can thus be performed multiple times, while reliably ensuring a sufficient after-injection volume. As a result, the control unit can more effectively increase the temperature of the exhaust gas.

According to another aspect of the present disclosure, the control unit includes a pilot injection volume calculating unit. The pilot injection volume calculating unit calculates the pilot injection volume sufficient to increase the in-cylinder temperature within the cylinders during the main injection timing up to a target in-cylinder temperature at which the combustion occurs with the target ignition delay. The pilot injection volume is calculated based on an estimated actual ignition delay of the main fuel that is to be injected into the cylinders and with the target ignition delay. The main injection timing setting unit includes a first injection volume calculating unit. The first injection volume calculating unit calculates a first pilot injection volume necessary for increasing the temperature to the target in-cylinder temperature via the pilot injection volume calculating unit when the main injection timing is at the compression top dead center. Further, the main injection timing setting unit includes a second injection volume calculating unit. The second injection volume calculating unit calculates a second pilot injection volume necessary for increasing the temperature to the target in-cylinder temperature via the pilot injection volume calculating unit when the main injection timing is at the most delayed timing, which is retarded by a predetermined crank angle from the compression top dead center. The main injection timing setting unit further includes a main injection timing re-calculating unit. The main injection timing re-calculating unit calculates the main injection re-timing based on the target pilot injection volume. This is determined by linearly interpolating between the first pilot injection volume and the second pilot injection volume. The main injection timing setting unit further includes a injecting volume re-calculating unit. The injection volume re-calculating unit calculates a pilot injection re-volume corresponding to the main injecting re-timing via the pilot injection calculating unit. The main injection timing setting unit further includes a repetitive calculation unit. The repetitive calculation unit repeatedly recalculates the main injection re-timing and the pilot injection re-volume corresponding to the main injection re-timing by linearly interpolating between the pilot injection re-volume and the second pilot injection volume. This is repeated until an absolute value of the difference between the pilot injection re-volume and the target pilot injection volume is less than or equal to a predetermined threshold value. Or, the recalculations will be performed until the number of times calculating the main injection re-timing and the pilot injection re-volume reach a predetermined number of times. The main injection re-timing that is calculated via the repetitive calculation unit is set as the main injection timing.

Accordingly, the control unit performs the pilot injection with the target pilot injection volume. At this time, the main injection timing can be quickly set, such that the main fuel is combusted with the target ignition delay. This ensures the system is capable of reliably ensuring the combustion robustness. Further, the control unit allows the main injection timing to be retarded by the maximum extent, which is up until the target ignition delay has reached. This allows the exhaust gas to be effectively increased.

Additional objects, features, and advantages, of the present invention will be readily understood after reading the following detailed description together with the claims and the accompanying drawings, in which:

FIG. 1 is a view illustrating a schematic structure of a control system for an internal combustion engine according to a present embodiment.
FIG. 2 is a main flowchart illustrating one example of a fuel injection timing setting process that is implemented by a control unit according to the embodiment.
FIG. 3 is a sub-flowchart illustrating one example of a sub-process for a normal combustion mode setting process illustrated in FIG. 2.
FIG. 4 is a diagram for illustrating a main injection timing and a target main ignition crank angle in a normal combustion mode.

FIG. 5 is a first sub-flowchart illustrating one example of the sub-process of a heat-up combustion mode setting process illustrated in FIG. 2.

FIG. 6 is a second sub-flowchart illustrating one example of the sub-process of a heat-up combustion mode setting process illustrated in FIG. 2.

FIG. 7 depicts diagrams illustrating a method for determining the main injection timing in the heat-up combustion mode by repetitive calculations.

FIG. 8 depicts a diagram illustrating a target ignition delay when the main injection timing in the heat-up combustion mode is at a compression top dead center (0 degrees CA) and at a crank angle of 30 degrees CA.

FIG. 9 depicts diagrams illustrating one example of an in-cylinder temperature, a fuel injection volume of the injector, and fluctuations of combustion in the heat-up combustion mode.

FIG. 10 depicts diagrams illustrating one example of experiments in which a pilot injection volume, an after-injection volume, and respective exhaust gas temperatures are measured with respect to each main combustion timing in the heat-up combustion mode.

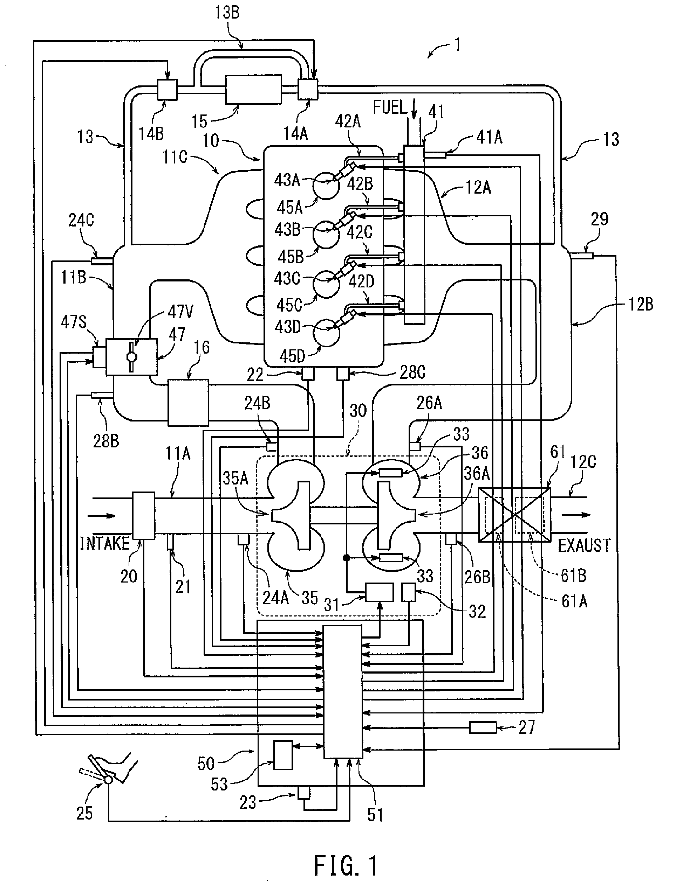

Hereinafter, one embodiment of a control system for an internal combustion engine will be described with reference to the drawings. As shown in FIG. 1, a control system 1 for an internal combustion engine according to the present embodiment includes an air cleaner 20, an intake air flow rate detector 21, a compression self-ignition type internal combustion engine installed in a vehicle (for example, a diesel engine) 10, a turbocharger 30, an intercooler 16, a control unit 50, etc.

Hereinafter, an internal combustion engine 10 will be described in order from an intake side to an exhaust side. As shown in FIG. 1, an intake air flow rate detector 21 (e.g., an intake air flow rate sensor) is provided on an inlet side of an intake pipe 11A to detect an intake air flow rate that is filtered by an air cleaner 20. The intake air flow rate detector 21 outputs detected signal in accordance with a flow rate of the air inhaled by the internal combustion engine 10 to the control unit 50.

An outlet side of the intake pipe 11A is connected to an inlet side of a compressor 35, while an outlet side of the compressor 35 is connected to an inlet side of an intake pipe 11B. The turbocharger 30 includes the compressor 35 having a compressor impeller 35A and a turbine 36 having a turbine impeller 36A. The compressor impeller 35A is rotatably driven by the turbine impeller 36A, which is rotatably driven by the exhaust gas. The compressor impeller 35A feeds the intake air introduced through the intake pipe 11A to the intake pile 11B under pressure so as to supercharge the intake air.

A compressor upstream pressure detector 24A is provided at the intake pipe 11A at a position located upstream of the compressor 35. The compressor upstream pressure detector 24A may be, for example, a pressure sensor that is configured to output a detected signal corresponding to pressure within the intake pipe 11A located upstream of the compressor 35 to the control unit 50 . A compressor downstream pressure detector 24B is provided at the intake pipe 11B at a position located downstream of the compressor 35. The compressor downstream pressure detector 24B is located between the compressor 35 and an intercooler 16 at the intake pipe 11B. The compressor downstream pressure detector 24B may be, for example, a pressure sensor that is configured to output a detected signal corresponding to pressure within the intake pipe 11B located downstream of the compressor 35 to the control unit 50.

The intercooler 16 is disposed upstream of the intake pipe 11B. A throttle device 47 is disposed downstream of the intercooler 16. The intercooler 16 is disposed downstream of the compressor downstream pressure detector 24B. The intercooler 16 serves to lower the temperature of the intake air supercharged by the compressor 35. An intake air temperature detector 28B (e.g., an intake air temperature sensor) is provided between the intercooler 16 and the throttle device 47. The intake air temperature detector 28B outputs a detected signal corresponding to the temperature of the intake air, the temperature having been lowered by the intercooler 16, to the control unit 50.

The throttle device 47 drives the throttle valve 47A, the throttle valve 47A being configured to adjust an opening amount of the intake pipe 11B, in accordance with a control signal from the control unit 50. This allows the throttle device 47 to adjust the intake air flow rate to the internal combustion engine 10. The control unit 50 outputs the control signal to the throttle device 47 in accordance with a detected signal from a throttle opening detector 47S (e.g., a throttle opening sensor) and a target throttle opening amount. This allows the control unit 50 to adjust the opening amount of the throttle valve 47A that is provided at the intake pipe 11B. The control unit 50 determines a target throttle opening amount and a fuel injection volume Qa to be injected in each of the cylinders 45A to 45D from the respective injectors 43A to 43D in accordance with a depression amount of an accelerator pedal detected based on the detected signal from an accelerator depression amount detector 25 and an operating condition of the internal combustion engine 10.

The accelerator pedal depression amount detector 25 is provided on an accelerator pedal. The accelerator pedal depression amount detector 25 may be, for example, an accelerator pedal depression angle sensor. The control unit 50 can detect the accelerator pedal depression amount based on the detected signal from the accelerator pedal depression amount detector 25.

An intake air pressure detector 24C is provided downstream of the throttle device 47 on the intake pipe 11B. An outlet side of an EGR pipe 13 is connected to a downstream part of the intake pipe 11B, for example, to a part of the intake pipe 11B downstream of the intake pressure detector 24C. An outlet side of the intake pipe 11B is connected to an inlet side of the intake manifold 11C. An outlet side of an intake manifold 11C is connected to an inlet side of the internal combustion engine 10. The intake air pressure detector 24C may be, for example, a pressure sensor, and is configured to output a detected signal corresponding to the pressure of the intake air immediately before the intake air flows into the intake manifold 11C. The EGR gas is exhausted through the EGR pipe 13 into the intake pipe 11B. The EGR gas flows into the EGR pipe 13 through an inlet of the EGR pipe 13 connected to the exhaust pipe 12B and is exhausted to the intake pipe 11B.

The internal combustion engine 10 includes a plurality of cylinders 45A to 45D. Injectors 43A to 43D are provided to respective cylinders 45A to 45D. Fuel is fed to the injectors 43A to 43D through a common rail 41 and fuel pipes 42A to 42D. The injectors 43A to 43D are driven based on a control signal from the control unit 50 and are configured to inject fuel into the respective cylinders 45A to 45D.

The common rail 41 is provided with a fuel pressure detector 41A (e.g., a fuel pressure sensor). Fuel is supplied via a fuel pump (not shown) to the common rail 41. The fuel pressure detector 41A outputs the detected signal corresponding to the common rail pressure within the common rail 41 to the control unit 50. The control unit 50 detects the common rail pressure within the common rail 41 based on a detected signal from the fuel pressure detector 41A.

The internal combustion engine 10 is provided with a rotation detector 22, a coolant temperature detector 28C, etc. The rotation detector 22 may be, for example, a rotation angle sensor. The rotation angle sensor 22 may be configured to output a detected signal corresponding to a rotation speed of a crank shaft of the internal combustion engine 10 (i.e., engine speed) and the rotation angle of the crank shaft (e.g., compression top dead center timing of each cylinder) to the control unit 50. The control unit 50 may detect the rotation speed, the rotation angle, etc., of the crank shaft of the internal combustion engine 10 based on a detected signal from the rotation detector 22. The coolant temperature detector 28C may be, for example, a temperature sensor. The coolant temperature detector 28C may be configured to detect the temperature of the coolant for cooling to be circulated in the internal combustion engine 10 and to output the detected signal in accordance with the detected temperature to the control unit 50.

The inlet side of the exhaust manifold 12A is connected to the exhaust side of the internal combustion engine 10. The inlet side of the exhaust pipe 12B is connected to the outlet side of the exhaust manifold 12A. The outlet side of the exhaust pipe 12B is connected to the inlet side of the turbine 36. The outlet side of the turbine 36 is connected to the inlet side of the exhaust pipe 12C.

The inlet side of the EGR pipe 13 is connected to the exhaust pipe 12B. The EGR pipe 13 allows the exhaust pipe 12B to communicate with the intake pipe 11B. The EGR pipe 13 serves to allow a portion of the exhausted gas from the exhaust pipe 12B (corresponding to an exhaust passage) to return to the intake pipe 11B (corresponding to an intake passage). The EGR pipe 13 is provided with a passage switching device 14A, a bypass pipe 13B, an EGR cooler 15, and an EGR valve 14B.

The passage switching device 14A is a passage switching valve configured to switch between the EGR cooler passage and a bypass passage based on a control signal from the control unit 50. The EGR gas flows from the exhaust pipe 12B to the EGR pipe 13. The EGR gas flowing through the EGR cooler passage returns to the intake passage via the EGR cooler 15. The bypass passage includes the bypass pipe 13B for bypassing the EGR cooler 15. The inlet side of the bypass pipe 13B is connected to the passage switching device 14A. The outlet side of the bypass pipe 13B is connected to the EGR pipe 13 between the EGR valve 14B and the EGR cooler 15. The EGR gas flowing through the bypass passage bypasses the EGR cooler and returns to the intake pipe 11B.

The EGR valve 14B is provided downstream of the EGR cooler 15 on the EGR pipe 13. The EGR valve 14B is provided downstream of a junction between the EGR pipe 13 and the bypass pipe 13B. The EGR valve 14B adjusts the flow rate of the EGR gas flowing through the EGR pipe 13. The EGR valve 14B does this by adjusting the opening amount of the EGR pipe 13 based on a control signal from the control unit 50.

The EGR cooler 15 is provided at a portion of the EGR pipe 13 extending between the passage switching device 14A and the junction between the EGR pipe 13 and the bypass pipe 13B. The EGR cooler 15 is a so-called heat exchanger, where a coolant for cooling is fed. The EGR cooler 15 cools the introduced EGR gas and exhausts it downstream.

The EGR gas is introduced in the intake pipe 11B via the EGR pipe 13, the EGR cooler 15 (or the bypass pipe 13B), and the EGR valve 14B. An exhausted gas temperature detector 29 is provided at the exhaust pipe 12B. The exhausted gas temperature detector 29 may be, for example, an exhausted gas temperature sensor that is configured to output a detected signal, which corresponds to the exhausted gas temperature, to the control unit 50. The control unit 50 is capable of estimating the temperature of the EGR gas introduced into the intake pipe 11B based on the exhausted gas temperature detected using the exhausted gas temperature detector 29, a controlled condition of the EGR valve 14B, an operation condition of the internal combustion engine 10, etc.

The outlet side of the exhaust pipe 12B is connected to the inlet side of the turbine 36. The outlet side of the turbine 36 is connected to the inlet side of the exhaust pipe 12C. The turbine 36 is provided with a variable nozzle 33 capable of controlling a flow velocity of the exhausted gas guided to the turbine impeller 36A. The opening amount of the variable nozzle 33 is adjusted by a nozzle driver 31. The opening amount of the variable nozzle 33 is detected by a nozzle opening detector 32, for example, a nozzle opening sensor. The control unit 50 outputs a control signal to the nozzle driver 31 in accordance with the detected signal from the nozzle opening detector 32 and in accordance with a target nozzle opening amount. This allows the opening amount of the variable nozzle 33 to be adjusted.

A turbine upstream pressure detector 26A is provided at the exhaust pipe 12B upstream of the turbine 36. The turbine upstream pressure detector 26A may be, for example, a pressure sensor. The turbine upstream pressure detector 26A is configured to output a detected signal corresponding to the pressure within the exhaust pipe 12B upstream of the turbine 36 to the control unit 50. A turbine downstream pressure detector 26B is provided at the exhaust pipe 12C downstream of the turbine 36. The turbine downstream pressure detector 26B may be, for example, a pressure sensor, and is configured to output a detected signal corresponding to the pressure within the exhaust pipe 12C downstream of the turbine 36 to the control unit 50.

An exhausted gas purifier 61 is arranged at the exhaust pipe 12C. For example, when the internal combustion engine 10 is a diesel engine, an oxidation catalyst (DOC: Diesel Oxidation Catalyst) 61A and a DPF (Diesel Particulate Filter) 61B are provided, from the upstream side, in the exhausted gas purifier 61. The oxidation catalyst 61A oxidizes and removes carbon monoxide (CO), hydrocarbons (HC), etc. contained in the exhaust gas. The DPF 61B is formed in a cylindrical shape by a porous member made of ceramic material or the like. The DPF 61B collects particulate matter (PM) as the exhaust gas flowing into each small pore from the upstream side passes through the porous material. This allows only the exhaust gas to flow out to a downstream side. Further, in the exhaust pipe 12C, a selective reduction catalyst (not shown), etc., is placed downstream of the exhaust gas purifier 61.

The control unit (ECU: Electronic Control Unit) 50 may include at least a processor 51 (CPU, MPU (Micro-Processing Unit), etc.) and a memory 53 (DRAM, ROM, EEPROM, SRAM, hard disk, etc.). The control unit 50 (ECU) is configured to detect an operation condition of the internal combustion engine 10 based on the detected signals from various detectors, including the above-mentioned detectors. The detectors used by the control unit 50 for detecting an operation condition shall not be limited to the detectors shown in FIG. 1. The control unit 50 (ECU) serves to control various actuators, including the injectors 43A to 43D, the EGR valve 14B, the passage switching device 14A, the nozzle driver 31, and the throttle device 47. The memory 53 is configured to store, for example, programs, parameters, etc. for implementing various processes.

An atmospheric pressure detector 23 may be, for example, an atmospheric pressure sensor and may be provided in the control unit 50. The atmospheric pressure detector 23 is configured to output a detection signal to the control unit 50 according to the atmospheric pressure around the control unit 50. A vehicle speed detector 27 may be, for example, a vehicle speed detecting sensor and may be installed on a wheel of the vehicle, etc. The vehicle speed detector 27 is configured to output a detected signal corresponding to the rotation speed of the wheels of the vehicle to the control unit 50.

[Fuel Injection Timing Setting Process]

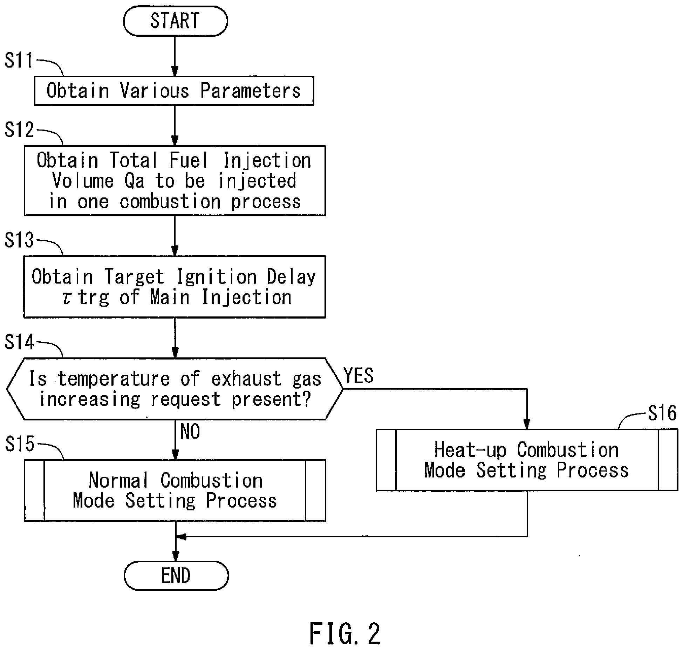

A "Fuel Injection Timing Setting Process" implemented by the control unit 50 will be described with reference to FIG. 2 to FIG. 10. In the fuel injection timing setting process, a fuel injection timing and a fuel injection volume of fuel to be injected into each cylinders 45A to 45D are set. The control unit 50 starts a process shown in FIG. 2 every time a rotation angle of the crank shaft reaches a predetermined angle, and proceeds the process to Step S11.

As shown in FIG. 2, first of all, in Step S11, the control unit 50 obtains various parameters and stores them in the memory 53. The process then proceeds to Step S12. The various parameters may be, for example, an accelerator pedal depression amount, a rotation speed Ne of the crank shaft of the internal combustion engine 10 (engine rotation speed), an intake air temperature Th, which is a temperature having been lowered by the intercooler 16, an intake air pressure Pi immediately before the intake air is introduced into the intake manifold 11C, an EGR gas recirculation volume, a boost pressure BP caused by the compressor 35, a fluid temperature Tw of the coolant circulating in the internal combustion engine 10, an atmospheric air pressure, and the like.

In Step S12, the control unit 50 reads the accelerator pedal depression amount and the rotation speed Ne of the crank shaft of the internal combustion engine 10 (engine rotation speed), both of which were obtained in the above Step S11, from the memory 53. After obtaining a total fuel injection volume Qa to be injected in one combustion process from maps (not shown) and storing the obtained value in the memory 53, the control unit 50 proceeds the process to Step S13.

In Step 13, the control unit 50 obtains a target ignition delay $\tau$trg of the main fuel injected into the cylinders 45A to 45D using a two-dimensional map. The two dimensional map includes a target ignition delay $\tau$trg corresponding to the rotation speed Ne of the crank shaft (engine rotation speed) and the total fuel injection volume Q. This two-dimensional map (not shown) is created through actual machine tests and is stored in the memory 53 in advance. The main injection is determined based on the total fuel injection volume Qa obtained in Step S12 and the rotation speed Ne of the crank shaft of the internal combustion engine 10. The target ignition delay $\tau$trg cor-

responding to the main injection and the rotation speed of the crank shaft is obtained from the two-dimensional map. After the target ignition delay τtrg is stored in the memory 53, the control unit 50 proceeds the process to Step S14.

In Step S14, the control unit 50 determines whether or not a temperature increasing request requiring the temperature of the exhaust gas to be increased is present. More specifically, the control unit 50 reads a temperature increasing request flag from the memory 53 and determines whether or not the temperature increasing request flag is set to "ON." When starting the control unit 50, the temperature increasing flag is set to "OFF" and stored in the memory 53. The temperature increasing request flag is set to "ON" and stored in the memory 53 when, for example, activation of the oxidation catalyst 61A of the exhaust gas purifier 61, etc. is necessary or when the temperature of the exhaust gas is needed to be increased for regenerating the DPF 61B by combusting the particulate matter (PM) collected by the DPF 61B.

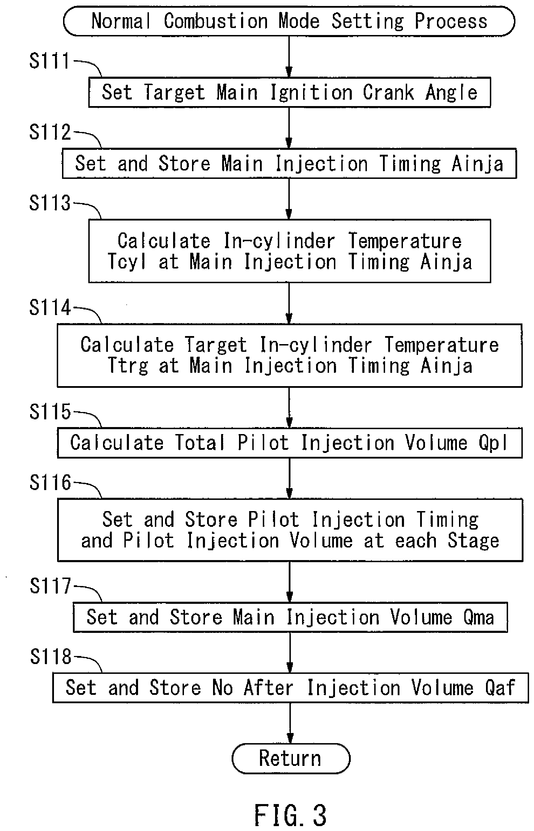

In Step S14, when the control unit 50 has been determined that no temperature increasing request requiring the temperature of the exhaust gas to be increased is present, i.e., when the control unit 50 has been determined that the temperature increasing request flag is set to "OFF" (S14:NO), the control unit 50 proceeds the process to Step S15. In Step 15, the control unit 50 ends the process after implementing a sub-process (see FIG. 3) of a "Normal Combustion Mode Setting Process." In the normal combustion mode setting process, the control unit 50 sets each fuel injection timing and each fuel injection volume under normal conditions, in that the pilot injections and the main injection are performed, while an after-injection is not. In the sub-process of the "normal combustion mode setting process," the control unit 50 sets the number of stages of the pilot injections, each pilot injection volume, and each pilot injection timing. The control unit 50 also sets the main injection volume of the main injection and the main injection timing. The control unit 50 stores these in the memory 53.

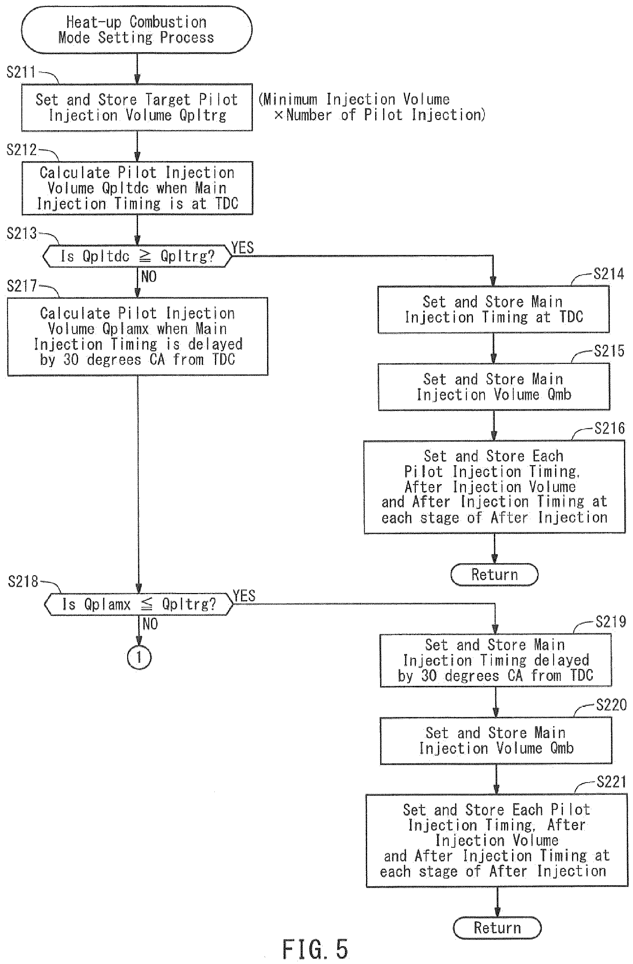

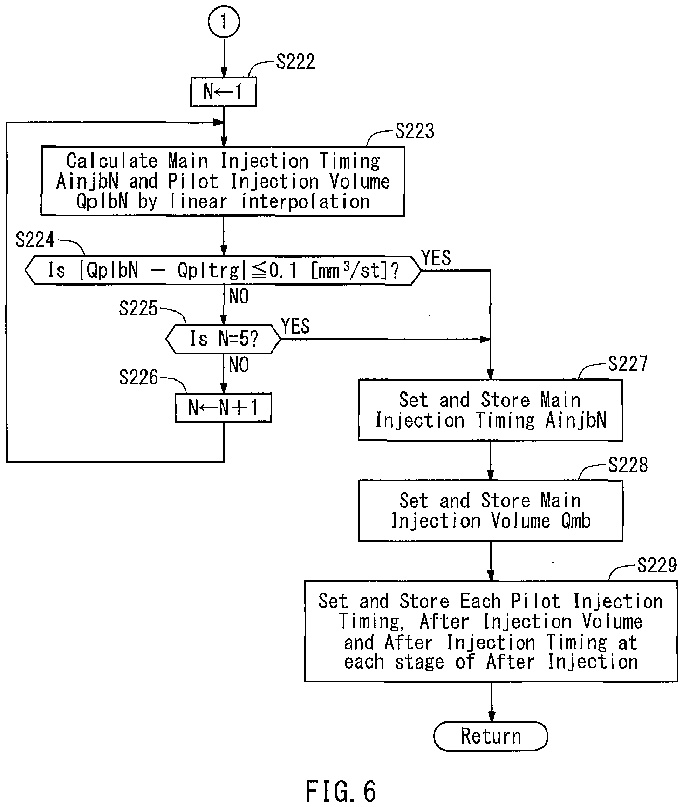

On the other hand, when the control unit 50 is determined that a temperature increasing request requiring the temperature of the exhaust gas to be increased is present, i.e., when the temperature increasing request flag is set to "ON" (S14:YES), the control unit 50 proceeds the process to Step S16. In Step 16, the control unit 50 ends the process after implementing a "Heat-up combustion Mode Setting Process" (see FIG. 5 and FIG. 6). In the Heat-up Combustion Mode Setting Process, the fuel injection timing and the fuel injection volume for increasing the temperature of the exhaust gas are set. This increasing the temperature of the exhaust gas are caused by performing the pilot injections, the main injection, and the after-injections. In a sub-process of the "Heat-up Combustion Mode Setting Process," the control unit 50 sets the number of stages of the pilot injections, each pilot injection volume, each pilot injection timing. The control unit 50 also sets the main injection volume of the main injection, the main injection timing, the number of stages of the after-injection, each after-injection volume, and each after-injection timing. The control unit 50 stores these in the memory 53.

In the "Injection Timing Setting Process," the number of the stages of the pilot injections, each pilot injection volume, and each pilot injection timing are stored in the memory 53. In a "Pilot Injection Process," the pilot injections are actually injected in each of the cylinders 45A to 45D based on these stored parameters. In a "Main Injection Process," the main injection is actually injected into each of the cylinders 45A to 45D based on the main injection volume of the main injection and the main injection timing stored in the memory 53. In an "After-Injection Process," the after-injections are actually injected into each of the cylinders 45A to 45D based on the number of the stages of the after-injections, each after-injection volume, and each after-injection timing stored in the memory 53. The "Pilot Injection Process," the "Main Injection Process," and the "After-injection Process" are performed at timings different from that of the "Injection Timing Setting Process." Since these processes are known to the public, they will not be described in detail. Further, when it has been set that the After-Injection Process is not to be performed, the control unit 50 will not perform the "After-injection Process."

[Normal Combustion Mode Setting Process]

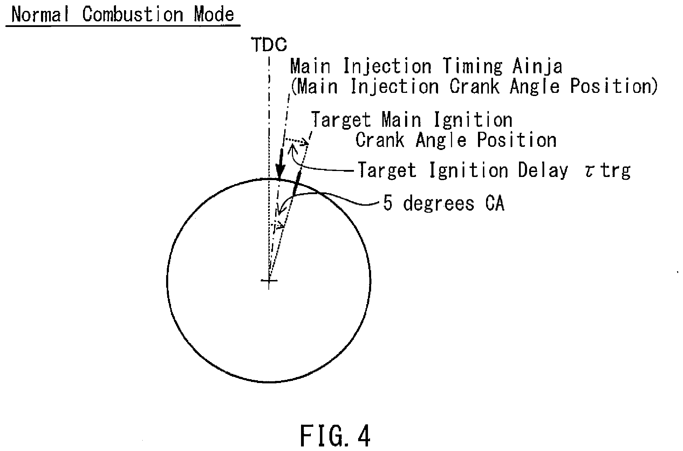

A sub-process for the "Normal Combustion Mode Setting Process" implemented by the control unit 50 in Step S15 of FIG. 2 will be described with reference to FIG. 3 and FIG. 4. As shown in FIG. 3, in Step S111, the control unit 50 first reads the rotation speed Ne of the crank shaft of the internal combustion engine 10 (engine rotation speed) obtained in Step S11 and the total fuel injection volume Qa obtained in Step S12 from the memory 53. Further, the control unit 50 obtains a total main ignition crank angle using the two-dimensional map based on the parameters. The two-dimensional map (not shown) indicates the target main ignition crank angles. Each of the target main ignition crank angle is determined by the rotation speed Ne of the crank shaft (engine rotation speed) and the total fuel injection volume Q. The main ignition crank angle is an angle at which the combustion of the main fuel injected into the cylinders 45A to 45D starts. The main injection is determined so as to correspond to the total fuel injection volume Q. After the target main ignition crank angle is stored in the memory 53, the control unit 50 proceeds the process to Step S 112.

For example, as shown in FIG. 4, the target main ignition crank angle is a crank angle delayed by about 5 degrees CA from the compression top dead center (TDC). The two-dimensional map (not shown) includes the target main ignition crank angle corresponding to the rotation speed Ne of the crank shaft (engine rotation speed) and the total fuel injection volume Q. This two-dimensional map (not shown) is created through actual machine tests and stored in the memory 53 in advance.

As shown in FIG. 3, in Step S112, the control unit 50 reads the target ignition delay τtrg obtained in Step S13 from the memory 53. The control unit 50 then calculates a main injection crank angle at a main injection timing Ainja from the target main ignition crank angle obtained in Step S111 and the target ignition delay τtrg. After the main injection crank angle is stored in the memory 53, the control unit 50 proceeds the process to Step S 113. More specifically, the control unit 50 calculates or obtained the crank shaft rotation speed of the from the rotation speed Ne of the crank shaft (engine rotation speed). Subsequently, the control unit 50 calculate the main injection crank angle at the main injection timing Ainja by subtracting the rotation angle obtained by multiplying the crankshaft rotation speed by the target ignition delay τtrg from the target main ignition crank angle.

In Step S 113, the control unit 50 calculates the in-cylinder temperature Tcyl of the cylinders 45A to 45D at the main injection crank angle at the main injection timing Ainja using the gas state equation. After the in-cylinder temperature Tcy1 is stored in the memory 53, the control unit 50 proceeds the process to Step S114. In addition to or alternative to this, the control unit 50 may estimate the in-cylinder temperature Tcy1 at the main injection crank angle at the main injection timing Ainja based on the intake air temperature Th or the fluid temperature Tw obtained in Step S11.

In Step S114, the control unit 50 first calculates the estimated actual ignition delay τ using the Arrhenius equation (1) shown below. In the Arrhenius equation (1), "Fuel" is a fuel partial pressure in the cylinders 45A to 45D at the end of the main injection. "O2" is an oxygen partial pressure in the cylinders 45A to 45D at the end of the main injection. "Tcy1" is an in-cylinder temperature Tcy1 at the main injection timing Ainja calculated in Step S113.

$$\tau = 1/\{A[\text{Fuel}]^B[O_2]^C \exp(-D/Tcyl)\} \quad \cdots (1)$$

"A," "B," "C," and "D" in the above Arrhenius equation (1) are model constants and are predetermined values obtained through experiments and simulations. These values are stored in the memory 53 in advance. More specifically, the model constant "B" is set to a value such that the higher the fuel partial pressure "Fuel," the smaller the estimated actual ignition delay τ. The model constant "C" is set to a value such that the higher the oxygen partial pressure "Oz," the smaller the estimated actual ignition delay τ.

The model constant "D" is set to a value such that the higher the in-cylinder temperature Tcy1 at the main injection timing Ainj, the smaller the estimated actual ignition delay τ. For example, the model constants "B," "C," and "D" may be set to positive values. Further, the model constant "A" is set to a value such that the greater the product of the B-square of the fuel partial pressure "Fuel," the C-square of the oxygen partial pressure "Oz," and the "exp(-D/Tcyl)," the smaller the estimated actual ignition delay τ. For example, the model constant "A" may be set to a positive value.

The fuel partial pressure "Fuel" is calculated as a product of the fuel concentration Cfuel in the cylinders 45A to 45D and the in-cylinder pressure Pcy. The fuel concentration Cfuel is a value corresponding to an in-spray equivalence ratio Φa at the end of the main injection. The in-spray equivalence ratio Φa at the end of the main injection is calculated based on the indicated value of the injection volume when the main injection is performed by the injectors 43A to 43D. Further, the oxygen partial pressure "O2" is calculated as a product of the oxygen concentration Cox in the cylinders 45A to 45D and the in-cylinder pressure Pcy.

Subsequently, the control unit 50 reads the target ignition delay τtrg obtained in Step S13 and the in-cylinder temperature Tcy1 at the main injection timing Ainja calculated in Step S113 from the memory 53. Further, the control unit 50 calculates a target in-cylinder temperature Ttrg at the main injection timing Ainja. The target in-cylinder temperature Ttrg is calculated, using an equation (2) shown below, from the target ignition delay τtrg, the in-cylinder temperature Tcy1 at the main injection timing Ainja, and the estimated actual ignition delay τ calculated using the Arrhenius equation (1). The control unit 50 proceeds the process to Step S115 after the target in-cylinder temperature Ttrg is stored in the memory 53.

$$Ttrg = Tcyl/\{1 + Tcyl/D \times \ln(\tau/\tau trg)\} \quad \cdots (2)$$

In Step S115, the control unit 50 reads the in-cylinder temperature Tcy1 calculated in Step S113 and the target in-cylinder temperature Ttrg calculated in Step S114 from the memory 53. The control unit 50 then calculates a total pilot injection volume Qpl required for increasing the in-cylinder temperature Tcy1 at the main injection timing Ainja to the target in-cylinder temperature Ttrg using an equation (3) shown below. After the control unit 50 stores the total pilot injection volume Qpl in the memory 53, the control unit 50 proceeds the process to Step S116.

$$Qpl = (Ttrg - Tcyl) \times Gcyl \times cv/\rho f/Ef \quad \cdots (3)$$

Here, the "Gcy1" represents an in-cylinder gas volume. The "cv" represents an in-cylinder gas specific heat. The "ρf" represents a fuel density. The "Ef" represents a heating value per unit fuel. The in-cylinder gas volume "Gcy1" is obtained from a map (not shown) using the main injection crank angle at the main injection timing Ainja calculated in Step S112. Further, the in-cylinder gas specific heat "cv," the fuel density "ρf," and the heating value per unit fuel "Ef" are stored in the memory 53 in advance.

In Step S116, the control unit 50 sets the number of pilot injections (the number of stages) and each pilot injection timing Api based on the main injection timing Ainja set in Step S112. For example, the control unit 50 sets the crank angle at the first-stage pilot injection timing Api1, with the number of pilot injections being two, such that the crank angle at the first-stage pilot injection timing Api1 is advanced as much as possible from the crank angle of the main injection timing Ainja. Further, the control unit 50 sets the crank angle of the second stage pilot injection timing Api2 such that the crank angle of the second stage pilot injection timing Api2 is closer to the crank angle of the main injection timing Ainja. That is, the crank angle of the second stage pilot injection timing Api2 is advanced by a smaller crank angle from the main injection timing Ainja.

The control unit 50 then calculates the pilot injection volumes Qpla1 and Qpla2 by allocating the total pilot injection volume Qpl calculated in Step S115 between the first stage pilot injection volume Qpla1 and the second stage pilot injection volume Qpla2 based on the estimated actual ignition delays $\tau$p1, $\tau$p2 at each of the pilot injection timings Api1, Api2. The estimated actual ignition delays $\tau$p1, $\tau$p2 are calculated using the above Arrhenius equation (1). After the pilot injection volumes Qpla1, Qpla2 are stored in the memory 53 so as to correspond to the respective pilot injection timings Api1, Api2, the control unit 50 proceeds the process to Step S117. For example, the control unit 50 calculates the pilot injection volumes Qpla1 and Qpla2 by allocating the total pilot injection volume Qpl between the first stage pilot injection volume Qp1a1 and the second stage pilot injection volume Qpla2 in a ratio of 6:4. The control unit 50 stores the pilot injection volumes Qpla1, Qpla2 so as to correspond to the respective pilot injection timings Api1, Api2.

In Step S117, the control unit 50 reads the total fuel injection volume Qa calculated in Step S12 and the total pilot injection volume Qp1 calculated in Step S115 from the memory 53. Further, after the injection volume is determined by subtracting the total pilot injection volume Qp1 from the total fuel injection volume Qa, the value is stored as a main injection volume Qma in the memory 53. The main injection volume Qma is stored so as to correspond to the main injection timing Ainja set in Step S112. The control unit 50 then proceeds the process to Step S118.

In Step S118, the control unit 50 reads an after-injection flag from the memory 53, sets the after-injection flag to "OFF," and stores this again in the memory 53. After setting that the after-injection process is not to be performed, the control unit 50 ends the sub-process and returns to the main flowchart. This generally indicates the end the combustion injection timing setting process. The after-injection flag is also set to "OFF" and stored in the memory 53 when starting the control unit 50.

[Heat-up Combustion Mode Setting Process]

A sub-process of the "Heat-up Combustion Mode Setting Process" implemented by the control unit 50 in Step S16 will be described with reference to FIG. 5 to FIG. 10. When the temperature of the exhaust gas needs to be increased, the pilot injections and main injection are still performed, followed by one or more after-injection to increase the temperature of the exhaust gas.

As shown in FIG. 5, in Step S211, the control unit 50 first obtains the number of pilot injections corresponding to the rotation speed Ne (engine rotation speed) of the crank shaft of the internal combustion engine 10 obtained in Step S11 from a map (not shown). This map includes the number of pilot injections relative to the rotation speed Ne of the crank shaft of the internal combustion engine 10. This map is created through actual machine tests and simulations and stored in the memory 53 in advance. The control unit 50 stores the obtained number of the pilot injections in the memory 53.

Subsequently, the control unit 50 reads a minimum injection volume Qimin that can be injected from the injectors 43A to 43D from the memory 53. After the control unit 50 stores the injection volume as the target pilot injection volume Qpltrg, the process proceeds to Step S212. The target pilot injection volume Qpltrg is obtained by multiplying the minimum injection volume Qimin by the number of pilot injections stored in the memory 53. The minimum injection volume Qimin that can be injected from the injectors 43A to 43D is actually measured for each internal combustion engine and stored in the memory 53 in advance.

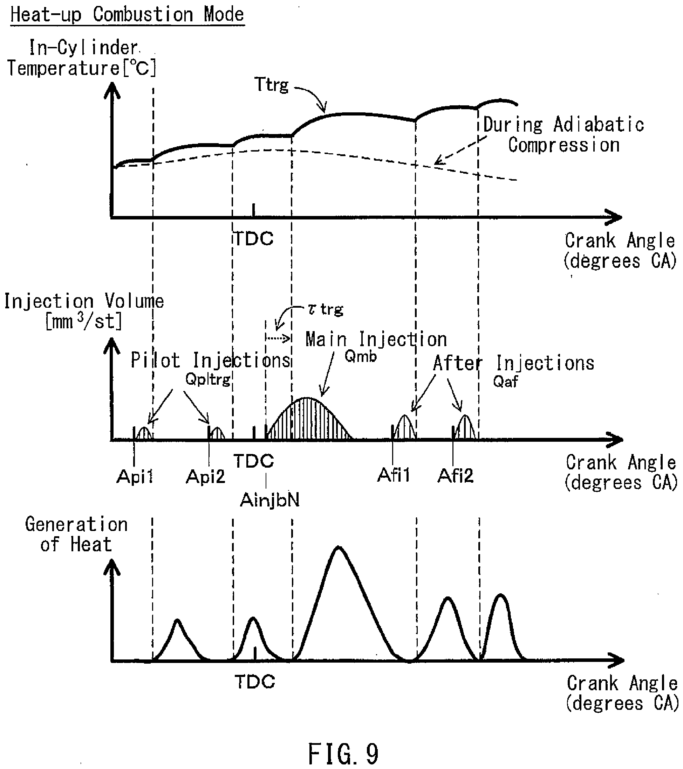

For example, as shown in a middle diagram of FIG. 9, the pilot injections may be performed twice. In this case, the control unit 50 stores the value of the injection volume determined by multiplying the minimum injection volume Qimin that can be injected by the injectors 43A to 43D by "2" as the target pilot injection volume Qpltrg. Therefore, the target pilot injection volume Qpltrg becomes a minimum value of the total pilot injection volume Qpl that can be injected into the cylinders 45A to 45D by the injectors 43A to 43D.

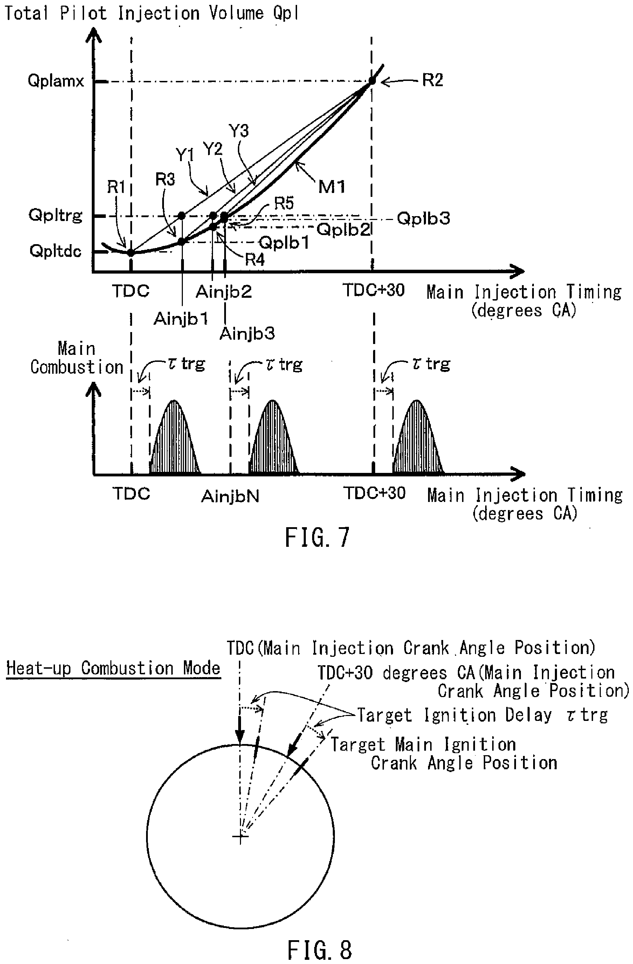

In Step S212, the control unit 50 sets the main injection timing Ainjb at the compression top dead center (TDC) as shown in FIG. 7 and FIG. 8. After the control units 50 calculates and stores the pilot injection volume Qpltdc (which corresponds to the first pilot injection volume) as the total pilot injection volume Qpl for this stage of the process in the memory 53, the process proceeds to Step S213. More specifically, the control unit 50 first calculates the in-cylinder temperature Tcyl of the cylinders 45A to 45D at the compression top dead center (TDC) of the main injection timing Ainjb from the gas state equation and stores the result in the memory 53. The control unit 50 then calculates the estimated actual ignition delay $\tau$ when the main injection timing Ainjb is set at the compression top dead center (TDC) using this in-cylinder temperature Tcyl and the above described Arrhenius equation (1) and stores the result in the memory 53.

Subsequently, the control unit 50 calculates the target in-cylinder temperature Ttrg when the main injection timing Ainjb is at the compression top dead center (TDC). More specifically, the control unit 50 sets the main injection timing Ainjb at the compression top dead center (TDC). The target in-cylinder temperature Ttrg is calculated using the estimated actual ignition delay $\tau$ at this stage of the process, the in-cylinder temperature Tcyl at the timing of the main injection, the target injection delay $\tau$trg obtained in Step S13, and equation (2). The control unit 50 stores this calculated target in-cylinder temperature Ttrg in the memory 53. The control unit 50 then calculates the pilot injection volume Qpltdc, which is the total pilot injection volume Qpl when the main injection timing Ainjb is set at the compression top dead center (TDC). More specifically, the pilot injection volume Qpltdc is calculates using the in-cylinder temperature Tcyl when the main injection timing Ainjb is at the compression top dead center (TDC), the target in-cylinder temperature Ttrg, and equation (3). The control unit 50 stores the calculated pilot injection volume Qpltdc in the memory 53.

In Step S213, the control unit 50 determines whether or not the pilot injection volume Qpltdc of the total pilot injection volume Qpl calculated in Step S212 is greater than or equal to the target pilot injection volume Qpltrg calculated in Step S211. If the control unit 50 determined that the pilot injection volume Qpltdc is greater than or equal to the target pilot injection volume Qpltrg (S213: YES), the process proceeds to Step S214.

In Step S214, after the control unit 50 set the main injection timing Ainjb at the crank angle position of the compression top dead center (TDC) and stored it in the memory 53, the process proceed to Step S215. As a result, the control unit 50 sets the main injection timing Ainjb at the crank angle position at the compression top dead center (TDC) as shown in FIG. 7 and FIG. 8. In this case, the combustion of the main fuel injected by the main injection is started at a timing elapsed from the compression top dead center (TDC) by the target ignition delay $\tau$trg.

In Step S215, the control unit 50 obtains the main injection volume Qmb corresponding to the rotation speed Ne of the crank shaft of the internal combustion engine 10 (engine rotation speed) obtained in Step S11 from a map (not shown). This map includes the main injection volume Qmb corresponding to the rotation speed Ne of the crank shaft of the internal combustion engine 10 (engine rotation speed). This map is created through actual machine tests and simulations and stored in the memory 53 in advance. After the control unit 50 stores the obtained main injection volume Qmb in the memory 53, the process proceeds to Step S216.

In Step S216, the control unit 50 reads the number of the pilot injections set in Step S211 from the memory 53. The control unit 50 then sets each pilot injection timing Apin as shown in FIG. 9. Each pilot injection timing Apin is set such that the main fuel injected into the cylinder 45A to 45D at the compression top dead center (TDC) of the main injection timing Ainjb set in Step S214 starts combusting at the target ignition delay $\tau$trg obtained in Step S13. The control unit 50 then stores the minimum injection volume Qimin that can be injected from the injectors 43A to 43D as the pilot injection volume in the memory 53 so as to correspond to each pilot injection timing Apin.

The control unit 50 then calculates the total after-injection volume Qaf and stores the result in the memory 53. The total after-injection volume Qaf is calculated by subtracting the target pilot injection volume Qpltrg set in Step S211 and the main injection volume Qmb set in Step S215 from the total fuel injection volume Qa obtained in Step S12. Subsequently, the control unit 50 sets the number of the after-injections (the number of stages), the after-injection volume in each stage obtained by allocating the total after-injection volume Qaf, and each after-injection timing Afin. The control unit 50 stores these set parameters in the memory 53. The control unit 50 then reads the after-injection flag from the memory 53 and sets the after-injection flag "ON." The control unit then stores the after-injection flag in the memory 53 again. After setting the flag to indicate that the after-injection is to be performed, the control unit 50 ends the sub-process and returns to the main flowchart. This generally ends the combustion injection timing setting process.

On the other hand, when the pilot injection volume Qpltdc, which was previously set as the total pilot injection volume Qpl, was determined less than the target pilot injection volume Qpltrg (S213:NO) in step S213, the control unit 50 proceeds the process to Step S217. In Step S217, the control unit 50 sets the main injection timing Ainjb at a crank angle position delayed by 30 degrees CA from the compression top dead enter (TDC) (most delayed timing), as shown in FIG. 7 and FIG. 8. After the control unit 50 calculates the pilot injection volume Qplamx (second pilot injection volume), which corresponds to the total pilot injection volume QPl at this stage of the process and stores it in the memory 53, the process proceeds to Step S218. The most delayed timing may be set to any crank angle between 25 and 40 degrees CA, and is therefore not limited to 30 degrees CA.

More specifically, the control unit 50 first calculates the in-cylinder temperature Tcyl of the cylinders 45A to 45D at the crank angle position delayed by 30 degrees CA from the compression top dead center (TDC) of the main injection timing Ainjb (most delayed timing) using the gas state equation and stores it in the memory 53. The control unit 50 then sets the main injection timing Ainjb at the crank angle position delayed by 30 degrees CA from the compression top dead center (TDC) (most delayed timing) using this in-cylinder temperature Tcyl and the Arrhenius equation (1). The control unit 50 calculates the estimated actual ignition delay $\tau$ at this stage of the process and stores it in the memory 53.

Subsequently, the control unit 50 calculates the target in-cylinder temperature Ttrg at the crank angle position where the main injection timing Ainjb is delayed by 30 degrees CA from the compression top dead center (TDC) (most delayed timing). More specifically, the control unit 50 sets the main injection timing Ainjb at the crank angle position delayed by 30 degrees CA from the compression top dead center (TDC) (most delayed timing). The target in-cylinder temperature Ttrg is calculated using the estimated actual ignition delay $\tau$ at this timing, the in-cylinder temperature Tcyl at the timing of the main injection, the target injection delay $\tau$trg obtained in Step S13, and equation (2). The control unit 50 stores the target in-cylinder temperature Ttrg in the memory 53. The control unit 50 then calculates the pilot injection volume Qplamx, which is set to the total pilot injection volume QPl, at the crank angle position where the main injection timing Ainjb is delayed by 30 degrees CA from the compression top dead center (TDC) (most delayed timing). More specifically, the pilot injection volume Qplamx is calculated using the in-cylinder temperature Tcyl at the crank angle position where the main injection timing Ainjb is delayed by 30 degrees CA from the compression top dead center (TDC) (most delayed timing), the target in-cylinder temperature Ttrg, and the above equation (3). After the control unit 50 stores the calculated pilot injection volume QPlamx in the memory 53, the process proceeds to Step S218.

In Step S218, the control unit 50 determines whether or not the pilot injection volume QPlamx, which is set as the total pilot injection volume Qpl, calculated in Step S217 is less than or equal to the target pilot injection volume Qpltrg that was calculated in Step S211. If the control unit 50 determines that the total pilot injection volume Qplamx is less than or equal to the target pilot injection volume Qpltrg (S218: YES), the process proceeds to Step S219.

In Step S219, the control unit 50 sets the main injection timing Ainjb at the crank angle position delayed by 30 degrees CA from the compression top dead center (TDC) (most delayed timing). After the control unit 50 stores the main injection timing Ainjb in the memory 53, the process proceeds to Step S220. As a result, as shown in FIG. 7 and FIG. 8, the control unit 50 sets the main injection timing Ainjb at the crank angle position delayed by 30 degrees CA from the compression top dead center (TDC) (most delayed timing). In this case, the combustion of the main fuel injected during the main injection at a timing delayed by the target ignition delay $\tau$trg is started.

In Step S220, the control unit 50 obtains the main injection volume Qmb corresponding to the rotation speed Ne of the crank shaft of the internal combustion engine 10 (engine rotation speed) obtained in Step S11 from the map (not shown). This map includes the main injection volume Qmb corresponding to the rotation speed Ne of the crank shaft of the internal combustion engine 10 (engine rotation speed). After the control unit 50 stores the obtained main injection volume Qmb in the memory 53, the process proceeds to Step S221.

In Step S221, the control unit 50 reads the number of the pilot injections set in Step S211 from the memory 53. The control unit 50 then sets each pilot injection timing Apin as shown in FIG. 9. More specifically, the main fuel is injected into the cylinders 45A to 45D at the crank angle position delayed by 30 degrees CA from the compression top dead center (TDC) of the main injection timing Ainjb set in Step S219 (most delayed timing). Each pilot injection timing Apin is set such that the combustion of this main fuel starts delayed by the target ignition delay $\tau$trg obtained in Step S13. The control unit 50 then stores the minimum injection volume Qimin that can be injected by the injectors 43A to 43D as the pilot injection volume in the memory 53. They are stored so as to correspond to each pilot injection timing Apin.

The control unit 50 then calculates the total after-injection volume Qaf and stores the result in the memory 53. The total after-injection volume Qaf is calculated by subtracting the target pilot injection volume Qpltrg set in Step S211 and the main injection volume Qmb set in Step S220 from the total fuel injection volume Qa obtained in Step S12. The control unit 50 stores the calculated total after-injection volume Qaf in the memory 53. Subsequently, the control unit 50 sets the number of the after-injections (the number of stages), the after-injection volume of each stage obtained by allocating the total after-injection volume Qaf, and each after-injection timing Afin. The control unit 50 stores these set parameters in the memory 50. The control unit 50 then reads the after-injection flag from the memory 53 and sets the after-injection flag to "ON." The control unit 50 then stores the after-injection flag in the memory 53. After setting the flag to indicate that the after-injection is to be performed, the control unit 50 ends the sub-process, returns to the main flowchart, and ends the combustion injection timing setting process.

On the other hand, it may be determined that the total pilot injection volume Qplamx is greater than the target pilot injection volume Qpltrg in Step S218 (S218: NO). In this case, the control unit 50 proceeds the process to Step S222 shown in FIG. 6. In Step S222, the control unit 50 reads a counter N from the memory 53. The counter N represents the number of times the main injection timing has been calculated by linear interpolation. More specifically, control unit 50 sets the counter N to "1" to representing the first calculated time and stores the counter N again in the memory 53. The controller 50 then proceeds the process to Step S223. The counter N is set to "0" when the control unit 50 starts up and is stored in the memory device 53.

In Step S223, the control unit 50 calculates the main injection timing AinjbN (main injection re-timing) and the pilot injection volume QplbN (pilot injection re-volume) "N" number of time(s). More specifically, these parameters are calculated from the total pilot injection volume map M1, an example of which is shown in an upper diagram of FIG. 7. The total pilot injection volume map M1 represents the total pilot injection volume Qpl that results in the target ignition delay τtrg based on the main injection timing Ainjb. The "N" number of time(s) corresponds to when the counter N equals "N." For example, when the counter N is "1," the control unit 50 calculates the main injection timing Ainjb1 and the pilot injection volume Qplb1 for the first time. After the control unit 50 stores these calculated parameters in the memory 53, the process proceeds to Step S224.

More specifically, for example, when the counter N is "1," the control unit 50 calculates the main injection timing Ainjb1 based on a straight line Y1 and stores it in the memory 53. The straight line Y1 is a line connecting a point R1 and a point R2. The point R1 is a point on the total pilot injection volume map M1 that corresponds to the main injection timing Ainjb at the compression top dead center (TDC) and the pilot injection volume Qpltdc at the compression top dead center (TDC) calculated in Step S212. The point R2 is a point on the total pilot injection volume map M1 that corresponds to the main injection timing Ainjb at the crank angle CA 30 degrees from the top dead center (TDC+30 degrees CA) and the pilot injection volume Qplamx at the crank angle CA 30 degrees from the top dead center (TDC+30 degrees CA) calculated in Step S218. The "1" time main injection timing Ainjb1 is calculated by linear interpolation, for instance based on the previously calculated target pilot injection volume Qpltrg. More specifically, using the previously calculated straight line Y1, linear interpolation is used to determine the "1" time main injection timing Ainjb1 from the point on the straight line Y1 corresponding to the target pilot injection volume Qpltrg.

Subsequently, the control unit 50 calculates the pilot injection volume Qplb1 at a point R3 and stores it in the memory 53. The process then proceeds to Step S224. The point R3 represents the point on the total pilot injection volume Qpl curve of the total pilot injection volume map M1 that corresponds to the previously calculated main injection timing Ainjb1 where the counter N is "1." Alternatively, the control unit 50 may calculate the pilot injection volume Qplb1 corresponding to the main injection timing Ainjb1 similarly to Step S212. More specifically, the pilot injection volume Qplb1 may be calculated using the Arrhenius equation (1), the equation (2), and/or the equation (3).

In Step S224, the control unit 50 reads the pilot injection volume QplbN when the counter N equals "N" in the process and reads the target pilot injection volume Qpltrg from the memory 53. The control unit 50 determines a value by subtracting the target pilot injection volume Qpltrg from the pilot injection volume QplbN. The control unit 50 determines whether or not the absolute value of the determined value is less than or equal to a predetermined threshold value, for example, less than or equal to 0.1 [mm$^3$/st].

For example, when the counter N is "1," the control unit 50 reads the pilot injection volume Qplb1 and the target pilot injection volume Qpltrg from the memory 53.

The control unit 50 determines a value by subtracting the target pilot injection volume Qpltrg from the pilot injection volume Qplb1. The control unit 50 determines whether or not the absolute value of the determined value is less than or equal to the predetermined threshold value, for example, less than or equal to 0.1 [mm$^3$/st].

If the absolute value obtained by subtracting the target pilot injection volume Qpltrg from the pilot injection volume QplbN is determined to be greater than the predetermined threshold value, for example, greater than or equal to 0.1 [mm$^3$/st] (S224:NO), the control unit 50 proceeds the process to Step S225.

In Step 225, the control unit 50 reads the counter N from the memory 53. The control unit 50 determines whether or not the counter N is a predetermined number, for example, "5." In other words, the control unit 50 determines whether or not the number of times calculated by linearly interpolating the main injection timing has reached the predetermined number of times, for example, "5" times. It should be noted that the number of times is not limited to "5" times, but may instead be set to any other number of times, for example a value from 4 to 10 times. If the control unit 50 determines that the calculated number of times N is not the predetermined number, for example, "5" (S225: NO), the process proceeds to Step S226.

In Step S226, the control unit 50 reads the counter N from the memory 53. The control unit 50 adds "1" to this counter N and stores the new value in the memory 53. The processes after Step S222 will then be implemented again.

Therefore, if, for example, the counter N, to which the value "1" was added, is "2," the control unit 50 will calculate the second main injection timing Ainjb2 and the second pilot injection volume Qplb2 for the second time. These values are calculated again from the total pilot injection volume map M1 in Step S223, as shown in the upper diagram of FIG. 7. After the control unit 50 stores the calculated parameters in the memory 53, the process proceeds to Step S224.

More specifically, as shown in the upper diagram of FIG. 7, the control unit 50 reads the main injection timing Ainjb1 calculated in the previous Step S223, when the counter N was "1," and the corresponding pilot injection volume Qplb1 from the memory 53. As previously noted, the control unit 50 determined the point R3 on the total pilot injection volume map M1 corresponding to the first main injection timing Ainjb1 and the first pilot injection volume Qplb1. The point R2 was previously determined based on the crank angle CA being 30 degrees past the top dead center (TDC+30 degrees CA) and the associated pilot injection volume Qplamx, which were calculated in Step S218. The control unit 50 then determines another straight line Y2 by connecting the point R3 and the point R2. The main injection timing Ainjb2 when the counter N is equal to "2" is calculated by linear interpolation based on the straight line Y2 corresponding to these points R2, R3. This newly calculated main injection timing Ainjb2 is then stored in the memory 53. The main injection timing Ainjb2 when the counter N is "2" is a timing corresponding to the target pilot injection volume Qpltrg on the straight line Y2, determined by linear interpolation.

Subsequently, the control unit 50 calculates the pilot injection volume Qplb2 at a point R4 shown in the upper diagram of FIG. 7 from the total pilot injection volume map M1 and stores this value in the memory 53. The process then proceeds to Step S224. The point R4 corresponds to the point on the total pilot injection volume Qpl curve of the total pilot injection volume map M1 corresponding to the newly calculated main injection timing Ainjb2, which is when the counter N is "2." Alternatively, the control unit 50 may determine the pilot injection volume Qplb2 similarly to Step S212. In other words, the pilot injection volume Qplb2 may be calculated using the Arrhenius equation (1), the equation (2), and/or the equation (3).

If the newly calculated pilot injection volume Qplb2 is not near enough to the target pilot injection volume Qpltrg, a value of "1" is added to the counter N such that the value becomes "3." The control unit 50 then newly calculates the main injection timing Ainjb3 and the pilot injection volume Qplb3 for a third time, where the counter N is "3," from the total pilot injection volume map M1 in Step S223. After the control unit 50 stores these calculated parameters in the memory 53, the process proceeds to Step S224.

More specifically, as shown in the upper diagram of FIG. 7, the control unit 50 reads the main injection timing Ainjb2 calculated in the previous step S223, when the counter N equaled "2," and the corresponding pilot injection volume Qplb2 from the memory 53. The control unit 50 then reads the point R4 from the memory 53, which was determined based on the main injection timing Ainjb2 and the pilot injection volume Qplb2 from the total pilot injection volume map M1. The controller 50 also reads the point R2 from the memory 53, which was determined based on when the crank angle CA is 30 degrees past the top dead center (TDC+30 degrees CA) and the corresponding pilot injection volume Qplamx calculated in Step S218. The controller 50 then determines a new straight line Y3 by connecting the point R4 and the point R2. The third main injection timing Ainjb3, which corresponds to when the counter N equals "3," is calculated by linear interpolation from the straight line Y3. This calculated value stored in the memory 53. The main injection timing Ainjb3 when the counter N is "3" is a timing corresponding to the target pilot injection volume Qpltrg on the straight line Y3, determined by linear interpolation.

Subsequently, the control unit 50 calculates the pilot injection volume Qplb3 at a point R5 shown in the upper diagram of FIG. 7 from the total pilot injection volume map M1. This values is then stored in the memory 53. The process then proceeds to Step S224. The point R5 corresponds to the newly calculated main injection timing Ainjb3 on the total pilot injection volume Qpl curve of the total pilot injection volume map M1 when the counter N is "3." Alternatively, the control unit 50 may determine the pilot injection volume Qplb3 similarly to Step S212. In other words, the pilot injection volume Qplb3 may be calculated using the Arrhenius equation (1), the equation (2), and/or the equation (3).

If the newly calculated pilot injection volume Qplb3 is not near enough to the target pilot injection volume Qpltrg, a value of "1" is added to the counter N such that the value is "4." The control unit 50 then reads the third main injection timing Ainjb3 calculated in the previous Step S223, which corresponds to when the counter N is "3," and the corresponding pilot injection volume Qplb3 from the memory 53. The control unit 50 then reads the point R5 from the memory 53, which was determined based on the main injection timing Ainjb3 and the pilot injection volume Qplb3 in the total pilot injection volume map M1 when the counter N was "3." The controller 50 also reads the point R2, which was determined based on the crank angle CA being 30 degrees past the top dead center (TDC+30 degrees CA) and the corresponding pilot injection volume Qplamx, which was calculated in Step S218. The controller 50 then determines a new straight line Y4 (not shown) by connecting the point R5 and point R2. The fourth main injection timing Ainjb4, which is when the counter N is "4," is calculated by linear interpolation of the straight line Y4. The calculated value is then stored in the memory 53. The main injection timing Ainjb4 when the counter N is "4" is a timing corresponding to the target pilot injection volume Qpltrg on the straight line Y4, determined by linear interpolation.

Subsequently, the control unit 50 calculates the pilot injection volume Qplb4 from the total pilot injection volume map M1 and stores it in the memory 53. This value is set to correspond to a point R6 (not shown). The process then proceeds to Step S224. The point R6 corresponds to the newly calculated main injection timing Ainjb4 on the total pilot injection volume Qpl curve of the total pilot injection volume map M1 when the counter N is "4." Alternatively, the control unit 50 may determine the pilot injection volume Qplb4 similarly to Step S212. In other words, the pilot injection volume Qplb4 may be calculated using the Arrhenius equation (1), the equation (2), and/or the equation (3).

If the newly calculated pilot injection volume Qplb3 is not near enough to the target pilot injection volume Qpltrg, a value of "1" is added to the counter N such that it is "5." The control unit 50 then reads the fourth main injection timing Ainjb4 calculated in the previous Step S223, which was when the counter N was set to "4," and the corresponding pilot injection volume Qplb4 from the memory 53. The control unit 50 then reads the point R6 (not shown) from the memory 53, which was determined based on the main injection timing Ainjb4 and the pilot injection volume Qplb4 of the total pilot injection volume map M1 when the counter N was equal to "4." The controller 40 also reads the point R2 from the memory 53, which was determined based on the crank angle CA being 30 degrees past the top dead center (TDC+30 degrees CA) and the corresponding pilot injection volume Qplamx, which were calculated in Step S218. The controller 50 then determines another straight line Y5 (not shown) by connecting the point R6 and the point R2. The fifth main injection timing Ainjb5, which is when the counter N is equal to "5," is calculated by linear interpolation from the new straight line Y5. This calculated value is stored in the memory 53. The main injection timing Ainjb5 when the counter is equal to "5" is a timing corresponding to the target pilot injection volume Qpltrg on the straight line Y5, determined by linear interpolation.

Subsequently, the control unit 50 calculates the pilot injection volume Qplb5 from the total pilot injection volume map M1 and stores it in the memory 53. This value is set to correspond to a point R7 (not shown). The process then proceeds to Step S224. The point R7 corresponds to the newly calculated main injection timing Ainjb5 on the total pilot injection volume Qpl curve of the total pilot injection volume map M1 when the counter N is "5." Alternatively, the control unit 50 may determine the pilot injection volume Qplb5 similarly to Step S212. In other words, the pilot injection volume Qplb5 may be calculated using the Arrhenius equation (1), the equation (2), and/or the equation (3).

If it is determined that the absolute value obtained by subtracting the target pilot injection volume Qpltrg from the pilot injection volume QplbN is less than or equal to the predetermined threshold value, for example, less than or equal to 0.1[mm³/st] (S224: YES), the control unit 50 proceeds the process to Step S227. For example, when the counter N is "3," control unit 50 determines the absolute value of the result of subtracting the target pilot injection volume Qpltrg from the pilot injection volume Qplb3. If the control unit 50 determined that this absolute value is less than or equal to the predetermined threshold value, for example, less than or equal to 0.1 [mm³/st] (S224:YES), the control unit 50 proceeds the process to Step S227.

In Step S227, the control unit 50 stores the calculated main injection timing AinjbN as the main injection timing at which the main injection is to be injected. The process then proceeds to Step S228. The main injection timing AinjbN corresponds to the pilot injection volume QplbN with the absolute value of the difference to the target pilot injection volume Qpltrg that is less than or equal to the predetermined threshold value, which was calculated in Step S224. Alternatively, the main injection timing AinjbN may correspond to the target pilot injection volume Qpltrg when the counter N reaches a certain value, for instance as indicated in Step 225. This allows the control unit 50 to set the main injection timing AinjbN corresponding to the target pilot injection volume Qpltrg as the main injection timing having the target injection delay τtrg that was set in Step S13.

For example, when the counter N is "3," the absolute value of the result of the target pilot injection volume Qpltrg subtracted from the pilot injection volume Qplb3 is determined. If the control unit 50 determined that this absolute value is less than or equal to the threshold value, for example, 0.1 [mm³/st], the main injection timing Ainjb3 corresponding to the pilot injection volume Qplb3 is stored in the memory 53 as the main injection timing having the target injection delay τtrg that was set in Step S13. The process then proceeds to Step S228.

On the other hands, if the control unit 50 determines that the calculated number of times N has reached the predetermined number of times, for example, "5," more specifically, when the control unit 50 determines that the number of times calculating the main injection timing by linear interpolation has reached the fifth time (S225:YES), the control unit 50 proceeds the process to Step S227.

When the process is proceeded to Step S227 via Step S225, the control unit 50 stores the main injection timing Ainjb5 corresponding to the pilot injection volume Qplb5 calculated when the counter N equals "5" as the main injection timing at which the main injection is to be injected in the memory 53. The pilot injection volume Qplb5 when the counter N is "5" is the volume that is closest to the target pilot injection volume Qpltrg based on the set parameters. The control unit 50 can then set the main injection timing Ainjb5 corresponding to the pilot injection volume Qplb5 as the main injection timing having the target ignition delay τtrg that was set in Step S13. Incidentally, the value "N" in Step S225 shall not be limited to "5" times, but may be set in advance to any number of times, for instance any time between 4 and 10 times. The control unit 50 then proceeds the process to Step S228.

In Step S228, the control unit 50 sets the main injection volume Qmb and stores it in the memory 53. The process then proceeds to Step S229. The main injection volume Qmb is the volume of injection corresponding to the rotation speed of the crank shaft of the internal combustion engine 10 (i.e., engine speed) obtained in Step S11. The main injection volume Qmb is obtained as the injection volume corresponding to the rotation speed Ne of a crank shaft of the internal combustion engine 10 (i.e., engine speed) from a map (not shown) of the main injection volume Qmb. The map (not shown) for the main injection volume Qmb is created through actual machine tests and simulations, and is stored in the memory 53 in advance.

In Step S229, the control unit 50 reads the number of pilot injections set in Step S211 from the memory 53. The control unit 50 then sets each pilot injection timing Apin to allow the main fuel to start combusting with the target ignition delay τtrg obtained in Step S13. As shown in FIG. 9, the main fuel is injected into the cylinders 45A to 45D at the main injection timing AinjbN that was set in Step S227. The control unit 50 then stores in the memory 53 the minimum injection volume Qimin that can be injected from the injectors 43A to 43D as the pilot injection volume so as to correspond to each pilot injection timing Apin.

The control unit 50 then calculates the total after-injection volume Qaf and stores this in the memory 53. The total after-injection volume Qaf is calculated by subtracting the target pilot injection volume Qpltrg, which was set in Step S211, and the main injection volume Qmb, which was set in Step S228, from the total fuel injection volume Qa obtained in Step S12. The total pilot injection volume Qpltrg is the injection volume determined by multiplying the minimum injection volume Qimin that can be injected from the injectors 43A to 43D by the number of pilot injections. Therefore, the total after-injection volume Qaf can be maximized. In this way, the after-injections can be effectively multi-staged.

Subsequently, the control unit 50 sets the number (number of stages) of the after-injections, the after-injection volume Qafjn at each stage, and each after-injection timing Afin. The control unit 50 stores these values in the memory 53. The after-injection volume Qafjn at each stage is the injection volume determined by allocating the total after-injection volume Qaf between each stage. The control unit 50 then reads the after injection flag from the memory 50 and sets this to "ON." The control unit 50 newly stores the after-injection flag in the memory 53, thereby indicating that the after injection is to be performed. Afterwards, the control unit 50 ends the sub-process, returns to the main flowchart, and ends the combustion injection timing setting process.

Hereinafter, one example of how the target in-cylinder temperature Ttrg is increased when the "Fuel Injection Process" is performed will be described with reference to FIG. 9. The one example of the "Fuel Injection Process" shown in FIG.9 is based on the target pilot injection volume Qpltrg, the main injection timing AinjbN, the main injection volume Qmb, the total after-injection volume Qaf, etc., that are set by the sub-process of the heat-up combustion mode setting process. The "Fuel Injection Process" is implemented at a different timing from the "Injection Timing Setting Process".

As shown in FIG. 9, the number of stages of the pilot injection that is set by the heat-up combustion mode setting process and stored in the memory 53 may be, for example 2 stages. In this case, the minimum injection volume Qimin that can be injected from the injectors 43A to 43D is injected at each pilot injection timing Api1, Api2. The combustion is started with a predetermined ignition delay. Therefore, the target pilot injection volume Qpltrg will be twice as much as the minimum injection volume Qimin that can be injected from the injectors 43A to 43D. Therefore, the target pilot injection volume Qpltrg can be minimized. This ensures that the total after-injection volume Qaf is sufficient to allow the after-injections to be multi-staged.

Subsequently, the main fuel of the main injection volume Qmb is injected from the injectors 43A to 43D at the main injection timing AinjbN. The timing is set such that it is the most retarded injection timing from the compression top dead center (TDC) that still allows for the combustion to be started with the target ignition delay τtrg. When the number of the stages of the after-injections is, for example, 2 stages, each of the after-injection volumes Qafj1, Qafj2 obtained by allocating the total after-injection volume Qaf is injected from the injectors 43A to 43D at each of the after-injection timings Afi 1, Afi2. These after-injection combustions are started with a predetermined ignition delay. As a result, as shown in the upper diagram of FIG. 9, following the combustion of the main fuel injected by the main injection, the in-cylinder temperature is increased by combusting the fuel injected into each of the cylinders 45A to 45D from the injectors 43A to 43D during the two stage after-injections. Therefore, the temperature of the exhaust gas can reliably be increased.

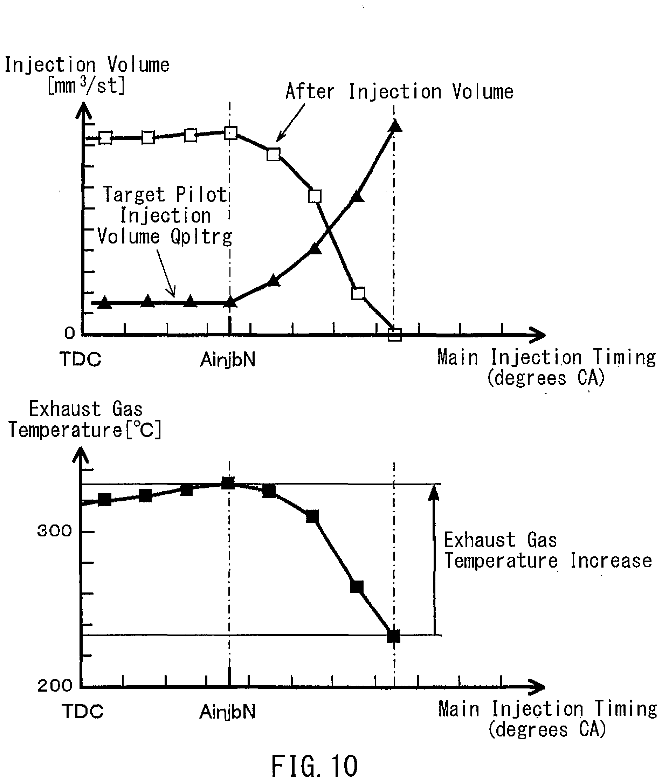

Hereinafter, one example will be described with reference to FIG. 10. The one example is experiments in which the pilot injection volume, the after-injection volume, and the temperature of the exhaust gas are measured at each main injection timing in the heat-up combustion mode. These experiments will be described with reference to FIG. 10. The main injection timing is retarded by a predetermined crank angle from the compression top dead center (TDC) to the main injection timing AinjbN. The main injection timing AinjbN is set by the sub-process of the heat-up combustion mode setting process. The pilot injection with the target pilot injection volume Qpltrg, which is set in Step S211, is then performed at each pilot injection timing. Subsequently, the total pilot injection volume Qpl is increased by a predetermined volume. The main injection is performed so that it is further retarded by a predetermined crank angle from the main injection timing AinjbN, and the exhaust gas temperature at this timing is measured.

As shown in the upper diagram of FIG. 10, the main injection timing is retarded from the top dead center (TDC) by a predetermined crank angle such that it becomes the main injection timing AinjbN. The main injection timing AinjbN is set by the sub-process of the heat-up combustion mode setting process. The pilot injection is performed with the target pilot injection volume Qpltrg that was set in Step S211. This ensures the total after-injection volume Qaf is sufficient to allow the after-injections to be multi-staged.

As a result, as shown in a lower diagram of FIG. 10, the in-cylinder temperature is increased due to the combustion of the fuel that is injected from each the injectors 43A to 43D as the after-injections. The temperature of the exhaust gas is, for example, increased up to about 320 to 330 [°C]. Further, the pilot injection with the target pilot injection volume Qpltrg is still performed. This allows the main injection to be retarded to the main injection timing AinjbN. The temperature of the exhaust gas at the timing of the after-injection and having the total after-injection volume Qaf is increased up to a maximum value of about 330 [°C].

Further, as shown in the upper diagram of FIG. 10, the pilot injection volume Qpl is increased by a predetermined amount, and the main injection is performed such that it is further retarded by a predetermined crank angle from the main injection timing AinjbN. In this case, the total after-injection volume Qaf is reduced by a predetermined amount and ultimately eliminated. As a result, as shown in the lower diagram of FIG. 10, as the total after-injection volume Qaf reduces, an increase in in-cylinder temperature due to the after-injection(s) may be lowered such that the temperature of the exhaust gas is, for example, lowered up to about 230 [°C].

Therefore, in this experimental example, the pilot injection is performed with the target pilot injection volume Qpltrg, which is set by the sub-process of the heat-up combustion mode setting process. The main injection is retarded to the main injection timing AinjbN. The after-injection is performed with the total after-injection volume Qaf. This causes an increase in temperature of the exhaust gas by about 100[°C], compared to the case where no after-injection is performed. It is considered that the temperature of the exhaust gas is increased the most in this way.

Here, the control unit 50 serves as an example of a target ignition delay acquiring unit, a target pilot injection volume setting unit, a main injection timing setting unit, a pilot injection volume calculating unit, a first injection volume calculating unit, a second injection volume calculating unit, a main injection timing re-calculating unit, a injection volume re-calculating unit, and a repetitive calculation unit.

As described in detail above, the control system 1 of the internal combustion engine according to the present embodiment includes a control unit 50. The control unit 50 can set the main injection timing AinjbN such that the main fuel that is injected into the cylinders 45A to 45D by the main injection. This may be set for when the pilot injection is performed with the target pilot injection volume Qpltrg is to be combusted with the target ignition delay τtrg. Thereby, this ensures combustion robustness.

Further, the control unit 50 determines the injection volume by multiplying the minimum injection volume Qimin that can be injected from the injectors 43A to 43D by the number (number of stages) of the pilot injections to be injected. This determined injection volume is set as the target pilot injection volume Qpltrg. This allows the control unit 50 to minimize the pilot injection volume Qpl. In addition, the after-injections can be performed multiple times (multi-staged), while reliably ensuring the after-injection volume Qaf. As a result, the control unit 50 can effectively increase the temperature of the exhaust gas by allowing the after-injections to be multi-staged. Furthermore, the control unit 50 can minimize the pilot injection volume Qpl by performing the pilot injections with a lower target pilot injection volume Qpltrg. Further, the main injection timing AinjbN is retarded to the maximum extent until the target ignition delay τtrg has been reached. This allows the system to be capable of more effectively increasing the temperature of the exhaust gas.

Further, the control unit 50 calculates the main injection timing AinjbN and the pilot injection volume QplbN by linear interpolation from the total pilot injection volume map M1. The total pilot injection volume map M1 represents the total pilot injection volume Qpl that causes the target ignition delay τtrg relative to the main injection timing Ainjb as shown in the upper diagram of FIG. 7. The control unit 50 then determines the absolute value of a value obtained by subtracting the target pilot injection volume Qpltrg from the pilot injection volume QplbN. This absolute value may be less than or equal to the predetermined value (e.g., less than or equal to 0.1 [mm3/st]). Alternatively, the control unit 50 may determine that the number of times that the main injection timing AinjbN and pilot injection quantity QplbN were calculated by linear interpolation has reached a predetermined number of times (e.g., N=5 (times)). In this case, the main injection is set to be performed at the main injection timing AinjbN.

In this way, the control unit 50 can quickly set the main injection timing AinjbN at which the main fuel combusts with the target ignition delay τtrg, with the pilot injection with the target pilot injection volume Qpltrg being performed. This reliably ensures combustion robustness.

It should be noted that the present invention should not limited to the above-described embodiments, and various improvements, modifications, additions, and/or deletions are possible without departing from the scope of the present invention.

The values adopted for describing the above-described embodiments are only given by way of example, and should not be construed restrictively. Further, greater than or equal to ($\geq$), less than or equal to ($\leq$), greater than (>), and less than (<) may or may not include an equal sign.

The control unit 50 includes at least one programmed electronic processor. The control unit 50 includes at least one memory configured to store instructions or software executed by the electronic processor to carry out at least one of the functions of the control unit 50 described herein. For example, in some embodiments, the control unit 50 may be implemented as a microprocessor with a separate memory.

The memory 53 may include volatile or non-volatile memory. Examples of suitable memory 53 may include RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof.

Where the term "processor" or "central processing unit" or "CPU" is used for identifying a unit performing specific functions, it should be understood that, unless otherwise stated, those functions can be carried out by a single processor, or multiple processors arranged in any form, including parallel processors, serial processors, tandem processors, or cloud processing/cloud computing configurations. The software may include, for example, firmware, one or more applications, program data, filters, rules, one or more program modules, and/or other executable instructions.

The various examples described in detail above, with reference to the attached drawings, are intended to be representative of the present disclosure, and are thus non-limiting embodiments. The detailed description is intended to teach a person of skill in the art to make, use, and/or practice various aspects of the present teachings, and thus does not limit the scope of the disclosure, which is defined by the appended claims, in any manner. Furthermore, each of the additional features and teachings disclosed above may be applied and/or used separately or with other features and teachings in any combination thereof, so as to provide an improved control system for an internal combustion engine, and/or methods of making and using the same.

**Claims**

1. A control system (1) for an internal combustion engine configured to control a compression self-ignition type internal combustion engine having injectors (43A to 43D) configured to inject fuel into cylinders (45A to 45D), comprising:
a control unit (50) configured to control the injectors (43A to 43D) to perform pilot injections, followed by a main injection, and to perform after-injections at a timing of a temperature increase request when the temperature of exhaust gas is to be increased, the control unit (50) comprising:

   a target ignition delay acquiring unit configured to acquire a target ignition delay that is a target ignition delay such that the combustion of a main fuel injected into the cylinders (45A to 45D) during the main injection is started at a timing elapsed from the compression top dead center by the target ignition delay;
   a target pilot injection volume setting unit configured to set a target pilot injection volume of the pilot injections to ensure an after-injection volume of the after-injections, which is sufficient to allow the after-injections to be multi-staged, by limiting the pilot injections to the target pilot injection volume, wherein the after injection-volume is the result of subtracting the target pilot injection volume and a main injection volume from a total fuel injection volume; and
   a main injection timing setting unit configured to set a main injection timing where the main fuel injected into the cylinders (45A to 45D) is combusted, such that the main injection timing is retarded to the maximum extent possible until the target ignition delay has been reached due to the limitation of the pilot injections to the target pilot injection volume.

2. The control system (1) for the internal combustion engine as defined in claim 1, further comprising a memory (53), in which a target ignition delay is stored in advance, the target ignition delay corresponding to an engine rotation speed and a total fuel injection volume in one combustion stroke, and the control unit (50) obtains the target ignition delay from the memory (53).

3. The control system (1) for the internal combustion engine as defined in claim 2, wherein the memory (53) is configured to store a minimum injection volume that can be injected from the injectors (43A to 43D) in advance,
wherein the target pilot injection volume setting unit is configured to set the target pilot injection volume as a value obtained by multiplying the minimum injection volume by the number of pilot injections.

4. The control system (1) for the internal combustion engine as defined in one of claims 1 to 3, wherein the control unit (50) includes a pilot injection volume calculating unit configured to calculate the pilot injection volume necessary to increase an in-cylinder temperature within the cylinders (45A to 45D) during the main injection timing up to a target in-cylinder temperature to combust with the target ignition delay, the pilot injection volume is calculated based on an estimated actual ignition delay of the main fuel injected into the cylinders (45A to 45D) with the target ignition delay.

5. The control system (1) for the internal combustion engine as defined in claim 4, wherein the main injection timing setting unit comprises:

   a first injection volume calculating unit configured to calculate a first pilot injection volume necessary for increasing the in-cylinder temperature to the target in-cylinder temperature when the main injection timing is at a compression top dead center, and
   a second injection volume calculating unit configured to calculate a second pilot injection volume necessary for increasing the in-cylinder temperature to the target in-cylinder temperature when the main injection timing is at a most delayed timing that is retarded by a predetermined crank angle from the compression top dead center.

6. The control system (1) for the internal combustion engine as defined in claim 5, wherein the main injection timing setting unit further comprises:

   a main injection timing re-calculating unit configured to calculate a modified main injection re-timing having the target pilot injection volume determined by linearly interpolating from the first pilot injection volume and the second pilot injection volume; and

a injecting volume re-calculating unit configured to calculate a pilot injection re-volume corresponding to the main injecting re-timing.

7. The control system (1) for the internal combustion engine as defined in claim 6,

wherein the main injection timing setting unit includes a repetitive calculation unit configured to repeatedly recalculate the main injection re-timing and the pilot injection re-volume corresponding to the main injection re-timing by repeatedly linearly interpolating the pilot injection re-volume and the second pilot injection volume until an absolute value of a difference between the pilot injection re-volume and the target pilot injection volume is less than or equal to a predetermined threshold value, or until the number of times the main injection re-timing and the pilot injection re-volume have been recalculated reaches a predetermined number of times, and

wherein the main injection re-timing that is calculated via the repetitive calculation unit is set as the main injection timing.

## Patentansprüche

1. Steuersystem (1) für einen Verbrennungsmotor, das so konfiguriert ist, dass es einen Verbrennungsmotor der Kompressionsselbstzündungsart steuert, der Einspritzdüsen (43A bis 43D) aufweist, die so konfiguriert sind, dass sie Kraftstoff in Zylinder (45A bis 45D) einspritzen, mit:

einer Steuereinheit (50), die so konfiguriert ist, dass sie die Einspritzdüsen (43A bis 43D) so steuert, dass sie Voreinspritzungen, gefolgt von einer Haupteinspritzung, durchführen und Nacheinspritzungen zu einem Zeitpunkt einer Temperaturerhöhungsanforderung durchführen, wenn die Temperatur des Abgases erhöht werden soll, wobei die Steuereinheit (50) Folgendes umfasst:

eine Soll-Zündverzögerungs-Erfassungseinheit, die so konfiguriert ist, dass sie eine Soll-Zündverzögerung erfasst, die eine solche Soll-Zündverzögerung ist, dass die Verbrennung eines während der Haupteinspritzung in die Zylinder (45A bis 45D) eingespritzten Hauptkraftstoffs zu einem Zeitpunkt gestartet wird, der vom oberen Kompressionstotpunkt um die Soll-Zündverzögerung verstrichen ist;

eine Soll-Voreinspritzvolumen-Einstelleinheit, die so konfiguriert ist, dass sie ein Soll-Voreinspritzvolumen der Voreinspritzungen einstellt, um ein Nacheinspritzvolumen der Nacheinspritzungen zu gewährleisten, das ausreicht, um zu ermöglichen, dass die Nacheinspritzungen mehrstufig sind, indem die Voreinspritzungen auf das Soll-Voreinspritzvolumen begrenzt werden, wobei das Nacheinspritzvolumen das Ergebnis der Subtraktion des Soll-Voreinspritzvolumens und eines Haupteinspritzvolumens von einem Gesamtkraftstoffeinspritzvolumen ist; und

eine Haupteinspritzzeitpunkt-Einstelleinheit, die so konfiguriert ist, dass sie einen Haupteinspritzzeitpunkt einstellt, bei dem der in die Zylinder (45A bis 45D) eingespritzte Hauptkraftstoff verbrannt wird, so dass der Haupteinspritzzeitpunkt aufgrund der Begrenzung der Voreinspritzungen auf das Soll-Voreinspritzvolumen so weit wie möglich verzögert wird, bis die Soll-Zündverzögerung erreicht worden ist.

2. Steuersystem (1) für den Verbrennungsmotor nach Anspruch 1, ferner mit einem Speicher (53), in dem eine Soll-Zündverzögerung vorab gespeichert ist, wobei die Soll-Zündverzögerung einer Motordrehzahl und einer Gesamtkraftstoffeinspritzmenge in einem Verbrennungstakt entspricht, und die Steuereinheit (50) die Soll-Zündverzögerung aus dem Speicher (53) abruft.

3. Steuerungssystem (1) für den Verbrennungsmotor nach Anspruch 2, wobei der Speicher (53) so konfiguriert ist, dass er ein minimales Einspritzvolumen speichert, das von den Einspritzdüsen (43A bis 43D) im Voraus eingespritzt werden kann, wobei die Soll-Voreinspritzvolumen-Einstelleinheit so konfiguriert ist, dass sie das Soll-Voreinspritzvolumen als einen Wert einstellt, der durch Multiplizieren des minimalen Einspritzvolumens mit der Anzahl von Voreinspritzungen erhalten wird.

4. Steuersystem (1) für den Verbrennungsmotor nach einem der Ansprüche 1 bis 3, wobei die Steuereinheit (50) eine Voreinspritzmengen-Berechnungseinheit enthält, die so konfiguriert ist, dass sie die Voreinspritzmenge berechnet, die erforderlich ist, um eine Zylinderinnentemperatur in den Zylindern (45A bis 45D) während des Haupteinspritzzeitpunkts auf eine Soll-Zylinderinnentemperatur zu erhöhen, um mit der Soll-Zündverzögerung zu verbrennen, wobei die Voreinspritzmenge auf der Grundlage einer geschätzten tatsächlichen Zündverzögerung des in die Zylinder (45A bis 45D) eingespritzten Hauptkraftstoffs mit der Soll-Zündverzögerung berechnet wird.

5. Steuersystem (1) für den Verbrennungsmotor nach Anspruch 4, wobei die Haupteinspritzzeitpunkt-Einstelleinheit Folgendes umfasst:

eine erste Einspritzvolumen-Berechnungseinheit, die so konfiguriert ist, dass sie ein erstes Voreinspritzvolumen berechnet, das erforderlich ist, um die Zylinderinnentemperatur auf die Soll-Zylinderinnentemperatur zu erhöhen, wenn sich der Haupteinspritzzeitpunkt in einem oberen Verdichtungstotpunkt befindet, und

eine zweite Einspritzvolumen-Berechnungseinheit, die so konfiguriert ist, dass sie ein zweites Voreinspritzvolumen berechnet, das erforderlich ist, um die Zylinderinnentemperatur auf die Soll-Zylinderinnentemperatur zu erhöhen, wenn der Haupteinspritzzeitpunkt bei einem am meisten verzögerten Zeitpunkt liegt, der um einen vorbestimmten Kurbelwinkel gegenüber dem oberen Kompressionstotpunkt verzögert ist.

6. Steuersystem (1) für den Verbrennungsmotor nach Anspruch 5, wobei die Haupteinspritzzeitpunkt-Einstelleinheit ferner Folgendes umfasst:

eine Haupteinspritzzeitpunkt-Neuberechnungseinheit, die so konfiguriert ist, dass sie einen modifizierten Haupteinspritz-Neuzeitpunkt berechnet, wobei das Soll-Voreinspritzvolumen durch lineares Interpolieren aus dem ersten Voreinspritzvolumen und dem zweiten Voreinspritzvolumen bestimmt wird; und

eine Einspritzvolumen-Neuberechnungseinheit, die so konfiguriert ist, dass sie ein Voreinspritz-Neuvolumen berechnet, das dem Haupteinspritz-Neuzeitpunkt entspricht.

7. Steuerungssystem (1) für den Verbrennungsmotor nach Anspruch 6,

wobei die Haupteinspritzzeitpunkt-Einstelleinheit eine Wiederholungsberechnungseinheit enthält, die so konfiguriert ist, dass sie den Haupteinspritz-Neuzeitpunkt und das Voreinspritz-Neuvolumen, das dem Haupteinspritz-Neuzeitpunkt entspricht, durch wiederholtes lineares Interpolieren des Voreinspritz-Neuvolumens und des zweiten Voreinspritzvolumens wiederholt neu berechnet, bis ein absoluter Wert einer Differenz zwischen dem Voreinspritz-Neuvolumen und dem Soll-Voreinspritzvolumen kleiner oder gleich einem vorbestimmten Schwellenwert ist, oder bis die Anzahl der Male, die der Haupteinspritz-Neuzeitpunkt und das Voreinspritz-Neuvolumen neu berechnet wurden, eine vorbestimmte Anzahl von Malen erreicht, und

wobei der Haupteinspritz-Neuzeitpunkt, der über die Wiederholungsberechnungseinheit berechnet wird, als der Haupteinspritzzeitpunkt festgelegt wird.

**Revendications**

1. Système de commande (1) pour un moteur à combustion interne configuré pour commander un moteur à combustion interne du type à auto-allumage par compression présentant des injecteurs (43A à 43D) configurés pour injecter du carburant dans des cylindres (45A à 45D), comprenant :
une unité de commande (50) configurée pour commander les injecteurs (43A à 43D) afin d'effectuer des injections pilotes, suivies d'une injection principale, et pour effectuer des post-injections au moment d'une demande d'augmentation de température lorsque la température des gaz d'échappement doit être augmentée, l'unité de commande (50) comprenant :

une unité d'acquisition de retard d'allumage cible configurée pour acquérir un retard d'allumage cible qui est un retard d'allumage cible de telle sorte que la combustion d'un carburant principal injecté dans les cylindres (45A à 45D) pendant l'injection principale soit commencée à un moment écoulé depuis le point mort haut de compression par le retard d'allumage cible ;
une unité de réglage de volume d'injection pilote cible configurée pour définir un volume d'injection pilote cible des injections pilotes pour garantir un volume de post-injection des post-injections, qui est suffisant pour permettre aux post-injections d'être multi-étagées, en limitant les injections pilotes au volume d'injection pilote cible, dans lequel le volume de post-injection est le résultat de la soustraction du volume d'injection pilote cible et d'un volume d'injection principal à partir d'un volume d'injection de carburant total ; et
une unité de réglage de moment d'injection principale configurée pour définir un moment d'injection principale auquel le carburant principal injecté dans les cylindres (45A à 45D) est brûlé, de telle sorte que le moment d'injection principale soit retardé autant que possible jusqu'à ce que le retard d'allumage cible soit atteint en raison de la limitation des injections pilotes au volume d'injection pilote cible.

2. Système de commande (1) pour le moteur à combustion interne selon la revendication 1, comprenant en outre une mémoire (53), dans laquelle un retard d'allumage cible est stocké à l'avance, le retard d'allumage cible correspondant à une vitesse de rotation de moteur et à un volume d'injection de carburant total dans une course de combustion et l'unité de commande (50) obtient le retard d'allumage cible à partir de la mémoire (53).

3. Système de commande (1) pour le moteur à combustion interne selon la revendication 2, dans lequel la mémoire (53) est configurée pour stocker à l'avance un volume d'injection minimal qui peut être injecté à partir des injecteurs (43A à 43D),

dans lequel l'unité de réglage de volume d'injection pilote cible est configurée pour définir le volume d'injection pilote cible comme étant une valeur obtenue en multipliant le volume d'injection minimal par le nombre d'injections pilotes.

4. Système de commande (1) pour le moteur à combustion interne selon l'une des revendications 1 à 3, dans lequel l'unité de commande (50) inclut une unité de calcul de volume d'injection pilote configurée pour calculer le volume d'injection pilote nécessaire pour augmenter une température dans les cylindres à l'intérieur des cylindres (45A à 45D) au moment d'injection principale jusqu'à une température cible dans les cylindres pour brûler avec le retard d'allumage cible, le volume d'injection pilote est calculé sur la base d'un retard d'allumage réel estimé du carburant principal injecté dans les cylindres (45A à 45D) avec le retard d'allumage cible.

5. Système de commande (1) pour le moteur à combustion interne selon la revendication 4, dans lequel l'unité de réglage de moment d'injection principale comprend :

   une première unité de calcul de volume d'injection configurée pour calculer un premier volume d'injection pilote nécessaire pour augmenter la température dans les cylindres jusqu'à la température cible dans les cylindres lorsque le moment d'injection principale est à un point mort haut de compression, et
   une seconde unité de calcul de volume d'injection configurée pour calculer un second volume d'injection pilote nécessaire pour augmenter la température dans les cylindres jusqu'à la température cible dans les cylindres lorsque le moment d'injection principale est le moment le plus retardé qui est retardé d'un angle de vilebrequin prédéterminé par rapport au point mort haut de compression.

6. Système de commande (1) pour le moteur à combustion interne selon la revendication 5, dans lequel l'unité de réglage de moment d'injection principale comprend en outre :

   une unité de recalcul de moment d'injection principale configurée pour calculer un nouveau moment d'injection principale modifié présentant le volume d'injection pilote cible déterminé par interpolation linéaire à partir du premier volume d'injection pilote et du second volume d'injection pilote ; et

une unité de recalcul de volume d'injection configurée pour calculer un nouveau volume d'injection pilote correspondant au nouveau moment d'injection principale.

7. Système de commande (1) pour le moteur à combustion interne selon la revendication 6, dans lequel l'unité de réglage de moment d'injection principale inclut une unité de calcul répétitif configurée pour recalculer de manière répétée le nouveau moment d'injection principale et le nouveau volume d'injection pilote correspondant au nouveau moment d'injection principale par interpolation linéaire répétée du nouveau volume d'injection pilote et du second volume d'injection pilote jusqu'à ce qu'une valeur absolue d'une différence entre le nouveau volume d'injection pilote et le volume d'injection pilote cible soit inférieure ou égale à une valeur seuil prédéterminée, ou jusqu'à ce que le nombre de fois que le nouveau moment d'injection principale et le nouveau volume d'injection pilote ont été recalculés, atteigne un nombre de fois prédéterminé, et

dans lequel le nouveau moment d'injection principale qui est calculé par le biais de l'unité de calcul répétitif, est défini comme étant le moment d'injection principale.

FIG. 1

START

S11 — Obtain Various Parameters

S12 — Obtain Total Fuel Injection
Volume Qa to be injected
in one combustion process

S13 — Obtain Target Ignition Delay
$\tau$ trg of Main Injection

S14 — Is temperature of exhaust gas
increasing request present? —— YES

NO

S15 — Normal Combustion
Mode Setting Process

S16 — Heat-up Combustion
Mode Setting Process

END

FIG. 2

Normal Combustion Mode Setting Process

S111 — Set Target Main Ignition Crank Angle

S112 — Set and Store Main Injection Timing Ainja

S113 — Calculate In-cylinder Temperature Tcyl at Main Injection Timing Ainja

S114 — Calculate Target In-cylinder Temperature Ttrg at Main Injection Timing Ainja

S115 — Calculate Total Pilot Injection Volume Qpl

S116 — Set and Store Pilot Injection Timing and Pilot Injection Volume at each Stage

S117 — Set and Store Main Injection Volume Qma

S118 — Set and Store No After Injection Volume Qaf

Return

FIG. 3

Normal Combustion Mode

TDC
Main Injection Timing Ainja
(Main Injection Crank Angle Position)

Target Main Ignition
Crank Angle Position

Target Ignition Delay $\tau$ trg

5 degrees CA

FIG. 4

```
        ╭─────────────────────╮
        │  Heat-up Combustion  │
        │  Mode Setting Process │
        ╰─────────────────────╯
                    │
S211 ┌──────────────────────────┐   (Minimum Injection Volume
     │ Set and Store Target Pilot│    × Number of Pilot Injection)
     │  Injection Volume Qpltrg  │
     └──────────────────────────┘
                    │
S212 ┌──────────────────────────┐
     │  Calculate Pilot Injection│
     │   Volume Qpltdc when Main │
     │  Injection Timing is at TDC│
     └──────────────────────────┘
                    │
S213  ⟨ Is Qpltdc ≧ Qpltrg? ⟩ ─YES──────────────────────┐
                    │ NO                                  │ S214
S217 ┌──────────────────────────┐      ┌────────────────────────────┐
     │  Calculate Pilot Injection│      │     Set and Store Main      │
     │   Volume Qplamx when Main │      │   Injection Timing at TDC   │
     │  Injection Timing is delayed│    └────────────────────────────┘
     │  by 30 degrees CA from TDC│                       │ S215
     └──────────────────────────┘      ┌────────────────────────────┐
                    │                   │     Set and Store Main      │
                    │                   │    Injection Volume Qmb     │
                    │                   └────────────────────────────┘
                    │                                    │ S216
                    │                   ┌────────────────────────────┐
                    │                   │      Set and Store Each     │
                    │                   │     Pilot Injection Timing, │
                    │                   │      After Injection Volume │
                    │                   │   and After Injection Timing at│
                    │                   │  each stage of After Injection│
                    │                   └────────────────────────────┘
                    │                                    │
                    │                              ╭──────────╮
                    │                              │  Return  │
                    │                              ╰──────────╯
S218  ⟨ Is Qplamx ≦ Qpltrg? ⟩ ─YES──────────────────────┐
                    │ NO                                  │ S219
                  (1)                  ┌────────────────────────────┐
                                       │     Set and Store Main      │
                                       │   Injection Timing delayed  │
                                       │   by 30 degrees CA from TDC │
                                       └────────────────────────────┘
                                                        │ S220
                                       ┌────────────────────────────┐
                                       │     Set and Store Main      │
                                       │    Injection Volume Qmb     │
                                       └────────────────────────────┘
                                                        │ S221
                                       ┌────────────────────────────┐
                                       │    Set and Store Each Pilot │
                                       │    Injection Timing, After  │
                                       │       Injection Volume      │
                                       │   and After Injection Timing at│
                                       │  each stage of After Injection│
                                       └────────────────────────────┘
                                                        │
                                                  ╭──────────╮
                                                  │  Return  │
                                                  ╰──────────╯
```

FIG. 5

①

└─ S222

N←1

┌──────────────────────────────────────┐ ─ S223
│  Calculate Main Injection Timing       │
│  AinjbN and Pilot Injection Volume     │
│  QplbN by linear interpolation         │
└──────────────────────────────────────┘

S224 ─┐
⟨ Is |QplbN − Qpltrg|≦0.1 [mm³/st]? ⟩ ──YES──┐
                    │NO
S225 ─┐             │
      ⟨ Is N=5? ⟩ ──YES──────────────────────┤
                    │NO                        │
S226 ─┐             │                          │
      N←N+1         │             ┌────────────────────────────┐ ─ S227
                                  │   Set and Store Main        │
                                  │  Injection Timing AinjbN    │
                                  └────────────────────────────┘
                                               │
                                               ▼
                                  ┌────────────────────────────┐ ─ S228
                                  │   Set and Store Main        │
                                  │  Injection Volume Qmb       │
                                  └────────────────────────────┘
                                               │
                                               ▼
                        ┌──────────────────────────────────────┐ ─ S229
                        │  Set and Store Each Pilot Injection    │
                        │   Timing, After Injection Volume       │
                        │   and After Injection Timing at        │
                        │   each stage of After Injection        │
                        └──────────────────────────────────────┘
                                               │
                                               ▼
                                      ( Return )

FIG. 6

Total Pilot Injection Volume Qpl

FIG. 7

Heat-up Combustion Mode

TDC(Main Injection Crank Angle Position)

TDC+30 degrees CA(Main Injection
Crank Angle Position)

Target Ignition Delay τtrg

Target Main Ignition
Crank Angle Position

FIG. 8

Heat-up Combustion Mode

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020171783 A
- DE 102009010309 B4
- DE 102004032537 A1
- US 20050252198 A1
- JP 2020033921 A